(19) **Europäisches Patentamt / European Patent Office / Office européen des brevets**

(11) **EP 4 624 434 A1**

(12) **EUROPEAN PATENT APPLICATION**
published in accordance with Art. 153(4) EPC

(43) Date of publication:
01.10.2025 Bulletin 2025/40

(21) Application number: 23895917.5

(22) Date of filing: 09.06.2023

(51) International Patent Classification (IPC):
$C03C\ 10/02$ (2006.01)   $C03C\ 3/062$ (2006.01)
$H05K\ 5/03$ (2006.01)

(52) Cooperative Patent Classification (CPC):
C03B 32/02; C03C 3/062; C03C 10/00;
C03C 21/00; H05K 5/03

(86) International application number:
PCT/CN2023/099315

(87) International publication number:
WO 2024/113751 (06.06.2024 Gazette 2024/23)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 02.12.2022 CN 202211546703

(71) Applicant: Chongqing Aureavia Hi-Tech Glass Co., Ltd.
Chongqing 400714 (CN)

(72) Inventors:
• HUANG, Hao
  Chongqing 400714 (CN)
• ZHOU, Jingpeng
  Chongqing 400714 (CN)
• TIAN, Qian
  Chongqing 400714 (CN)
• XIE, Xiaolan
  Chongqing 400714 (CN)
• XIANG, Wenhao
  Chongqing 400714 (CN)

(74) Representative: Reich, Jochen
  Reich-ip
  Herrnstraße 15
  80539 München (DE)

(54) **TRANSPARENT COLORLESS SPINEL MICROCRYSTALLINE GLASS, AND PREPARATION AND USE THEREOF**

(57) The present invention relates to a transparent colorless spinel microcrystalline glass, and preparation and a use thereof. The microcrystalline glass contains $(Zn, Mg)Al_2O_4$ as a principal crystalline phase and $ZrO_2$ as a secondary tetragonal crystalline phase, and does not contain $TiO_2$. In mole percentage on an oxide basis, an oxide contained therein satisfies the following relational expressions: $Al_2O_3/(MgO+ZnO)=1.40\sim2.00$, and $K_2O+Li_2O+Na_2O+B_2O_3)/(SiO_2+Al_2O_3)=0.10\sim0.20$. The microcrystalline glass is obtained by performing heat treatment at a temperature of being not greater than 800°C. The microcrystalline glass has a transmittance of 85.0% or above for light having a wavelength of 550 nm. Anti-abrasive paper drop testing is performed on the microcrystalline glass by using 80-mesh abrasive paper, the average anti-abrasive paper drop height of the microcrystalline glass is greater than or equal to 1.00 m; the Vickers hardness is 800kgf/mm² or above, and the fracture toughness of the microcrystalline glass is $1.200MPa\cdot m^{1/2}$ or above. According to the present invention, the colorless transparent spinel microcrystalline glass having high transparency and excellent mass productivity can be obtained, and the microcrystalline glass can be subjected to chemical strengthening to obtain a chemically strengthened microcrystalline glass having excellent deep stress characteristics.

FIG. 7

**Description**

**CROSS-REFERENCE TO RELATED APPLICATION**

The present invention claims the priority of the Chinese application with application No. CN202211546703.5 submitted to China National Intellectual Property Administration on December 02, 2022, and the contents of which are incorporated herein by reference in entirety.

**TECHNICAL FIELD**

The present invention relates to transparent microcrystalline glass, and more specifically, to a transparent colorless microcrystalline glass with zinc-magnesium spinel solid solution as the principal crystalline phase.

**BACKGROUND ART**

With the development and progress of material science, many new materials have been used in the design and manufacture of intelligent terminal equipment. Microcrystalline glass materials have become a better choice for screen covers because of their excellent mechanical properties and excellent photopermeability. Microcrystalline glass, also known as glass-ceramics, is a material in which specific crystals are precipitated inside the glass by heat treatment for the base glass. The crystals dispersed inside the microcrystalline glass make it possible to have the physical property value that cannot be obtained in ordinary glass, for example, the significant enhancement of mechanical strength such as Young's modulus and shear toughness, and significant improvement in resistance to acidic and alkaline liquids.

Zinc-spinel ($ZnAl_2O_4$) is a cubic mineral. According to Mohs hardness scale, the hardness of the spinel is 7.5~8, and the measured density is 4.38~4.60g/cm$^3$. At ambient pressure, the Young's modulus of the zinc-spinel is about 290GPa, the shear modulus is about 146GPa, and the refractive index is 1.79~1.80. However, zinc-spinel crystals can easily make the glass opaque, and it is difficult to prepare transparent microcrystalline glass, which is not suitable for the preparation of screen cover. Although transparent microcrystalline glass can be prepared with magnesium-spinel ($MgAl_2O_4$) as the principal crystalline phase, the Young's modulus and shear modulus of magnesium-spinel crystal are not as good as those of zinc-spinel. Zinc-magnesium-spinel solid solution $(Zn, Mg)Al_2O_4$ is formed from zinc-spinel and magnesium-spinel, wherein the properties of the solid solution are almost the same as those of zinc-spinel ($ZnAl_2O_4$), and transparent microcrystalline glass can be prepared by taking the zinc-magnesium-spinel solid solution as the principal crystalline phase. Compared with transparent microcrystalline glass with magnesium-spinel as the principal crystalline phase, the transparent spinel microcrystalline glass with zinc-magnesium-spinel solid solution as the principal crystalline phase has higher Young's modulus and shear modulus, which can bring higher mechanical strength to microcrystalline glass materials.

Patent application US5968857A discloses a kind of microcrystalline glass with spinel as the main crystalline phase, which is composed of, expressed as a percentage by weight based on the oxide: 45~65% $SiO_2$, 14~28% $Al_2O_3$, 4~13% ZnO, 0~8% MgO, 0~10% $TiO_2$, 0~6% $ZrO_2$, 0~8% BaO, and 0~15% CsO, in which the combination of ZnO+MgO is greater than or equal to about 8, and the combination of $TiO_2$+$ZrO_2$ is greater than about 4, and the obtained microcrystalline glass has an optical property with a visible light transmittance of 85%. In a single-stage (or two-stage) heat treatment process, the upper temperature limit for crystal growth is preferably maintained within the range of 875~1050°C.

Patent application CN104478219A discloses a kind of spinel microcrystalline glass with 56~62wt% $SiO_2$, 19~23wt% $Al_2O_3$, 6~15wt% ZnO, 2~6.5wt% MgO, 2~6wt% $TiO_2$, 2~7wt% $ZrO_2$ as the basic composition, the crystallization treatment temperature of 880°C~1050°C, and the average grain size of 30~100nm.

Patent application CN111018354A discloses a kind of microcrystalline glass with low melting temperature, which composed of $SiO_2$: 48~55mol%, $Al_2O_3$: 14~17mol%, ZnO: 2~12mol%, MgO: 8~16mol%, $TiO_2$: 0.5~4.5mol%, $ZrO_2$: 0.1-3mol%, $Sb_2O_3$: 0.5~1mol% and $Na_2O$: 2~12mol%, in which a two-step heat treatment is carried out at 650~750°C and 800~870°C to obtain a kind of spinel microcrystalline glass with a visible light transmittance not less than 80%.

**SUMMARY**

The inventors studied and found that the spinel microcrystalline glass disclosed in the prior art generally cannot be toughened by chemical strengthening, resulting in that although the spinel microcrystalline glass has the characteristics of high hardness, the toughness is poor, and the drop resistance is poor, especially when the thickness is relatively small ($\leq$ 1mm), the brittleness is more obvious, so that it is not suitable for manufacturing the electronic cover glass requiring high impact resistance.

For the electronic cover glass, it is necessary to have excellent deep stress characteristics, such as a relatively high DOL_0 and CT_AV, especially the relatively high DOL_0, so as to achieve good drop resistance. In order to achieve excellent deep stress characteristics, the common means adopted in this field is to chemically strengthen the base glass to obtain the relatively high DOL_0 and CT_AV through ion exchange. In order to meet the requirements of ion-exchange chemical strengthening, it is necessary to add a certain amount of alkali metal oxides, such as $Li_2O$ and $Na_2O$, to the glass composition.

However, after further research, the inventors found that with the increase of the addition amount of $Li_2O$ and $Na_2O$ in the composition of spinel microcrystalline glass, zinc-magnesium-spinel solid solution is precipitated in the glass, but at the same time, some crystals that affect the optical properties of the microcrystalline glass are precipitated, such as β-quartz ($SiO_2$), β-quartz solid solution ($MgAl_2Si_3O_{10}$), β-spodumene. The precipitation of these impurity phase crystals easily leads to fogging or even devitrification of the prepared microcrystalline glass, so that it is difficult to obtain ideal transparent colorless spinel microcrystalline glass. How to make spinel microcrystalline glass meet the requirements of stress characteristics of cover glass while maintaining excellent optical properties is a technical problem that the inventors need to solve urgently.

Moreover, the inventors further found that the upper temperature limit for heat treatment in the preparation of spinel microcrystalline glass in the prior art, such as crystallization temperature in two-step heat treatment, is generally higher than 800°C, mostly above 850°C, or even above 900°C. However, such a high heat treatment temperature requires a relatively high demand on the heat treatment kiln, which is not conducive to energy saving and carbon reduction, thus greatly limiting the mass production of spinel microcrystalline glass.

In addition, most of the existing disclosed zinc-magnesium spinel transparent microcrystalline glass adopts a composite nucleating agent ($TiO_2$ + $ZrO_2$) to promote the molding of zinc-magnesium spinel microcrystalline glass. When $TiO_2$ is adopted as the nucleating agent, it is very easy to cause the glass to be colored; when only $ZrO_2$ is adopted as the nucleating agent, it is very easy to form $ZrO_2$ sediment, resulting in the glass being locally whitened, so that the overall uniformity of the glass is deteriorated.

In response to the problems found in the above research and development process, the inventor, through a large number of experimental research and analyses, found that: when adjusting the content of oxides in the glass formula, such as the content of $Al_2O_3$, $Li_2O$, $Na_2O$, $B_2O_3$, and $ZrO_2$, a kind of colorless and transparent spinel microcrystalline glass with a high degree of transparency and with a heat treatment temperature lower than 800°C can be obtained. The mass producibility of the colorless transparent spinel microcrystalline glass has been greatly improved. The microcrystalline glass can be chemically strengthened to produce chemically strengthened microcrystalline glass with excellent deep stress characteristics.

Specifically, the following technical solutions are provided in the present invention.

1. A microcrystalline glass is characterized in that it contains a zinc-magnesium-spinel solid solution (Zn, Mg)$Al_2O_4$ as a principal crystalline phase and a tetragonal $ZrO_2$ (tetragonal zirconia) as a secondary crystalline phase. The microcrystalline glass contains the following proportions of oxide components in terms of molar percentage of oxides:

| component | mol% |
|---|---|
| $SiO_2$ | 38.00%~50.00% |
| $Al_2O_3$ | 25.00%~30.00% |
| MgO | 4.00%~8.00% |
| ZnO | 8.00%~14.00% |
| $ZrO_2$ | 3.00%~5.00% |
| $Li_2O$ | 3.00%~8.00% (Excluding 8.00mol%) |

Furthermore, the microcrystalline glass is basically free of $TiO_2$, wherein "basically free" means that $TiO_2$ is not actively added or dosed into the glass, but can be present in very small amounts as an impurity or contaminant, wherein the content of the oxide component of the microcrystalline glass satisfies the following relational expressions:

(1)    $Al_2O_3/(MgO+ZnO)=1.40~2.00$;

(2)    $(K_2O+Li_2O+Na_2O+B_2O_3)/(SiO_2+Al_2O_3)=0.10~0.20$.

In the above relational expressions, each oxide represents the mole percentage content of oxide in the component.

2. The microcrystalline glass according to the technical solution 1, wherein the mole percentage of $SiO_2$ in the microcrystalline glass is 38.50%~48.50%; and/or the mole percentage of $Al_2O_3$ is 25.00%~29.00%; and/or the mole percentage of MgO is 4.50%~7.50%; and/or the mole percentage of ZnO is 8.50%~13.50%; and/or the mole percentage of $ZrO_2$ is 3.50%~4.50%; and/or the mole percentage of $Li_2O$ is 3.00%~7.80%.

3. The microcrystalline glass according to the technical solution 1 or 2, wherein the microcrystalline glass is prepared by adopting $ZrO_2$ as a nucleating agent.

4. The microcrystalline glass according to any one of the technical solutions 1-3, wherein the microcrystalline glass further contains oxide components in the following proportions in terms of mole percentage of oxides:

| | |
|---|---|
| $Na_2O$ | 0%~6.00% |
| $K_2O$ | 0%~3.00% |
| $B_2O_3$ | 0%~6.00% |
| BaO | 0%~4.00% |
| $Y_2O_3$ | 0%~2.00% |
| $La_2O_3$ | 0%~2.00% |

5. The microcrystalline glass according to any one of the technical solutions 1-4, wherein the content of oxide components, in terms of mol%, satisfies at least one of the relational expressions (3), (4) and (5):

(3)     $Al_2O_3/ SiO_2 = 0.50\sim0.80$;

(4)     $Li_2O/(K_2O+Li_2O+Na_2O) = 0.25\sim0.85$;

(5)     $Li_2O+Na_2O \geq 7.00 mol\%$.

6. The microcrystalline glass according to any one of the technical solutions 1-5, wherein the microcrystalline glass is obtained by heat treatment at a temperature not exceeding 800°C.

7. The microcrystalline glass according to any one of the technical solutions 1-6, wherein the weight ratio of the crystal phase of the microcrystalline glass to the microcrystalline glass is 25.0~45.0wt%, preferably 30.0~45.0wt%, and more preferably 32.0~40.0wt%.

8. The microcrystalline glass according to any one of the technical solutions 1-7, wherein the average grain size of the microcrystalline glass is 3.0~30.0nm, preferably 3.0~10.0nm, more preferably 5.0~6.5nm, and further preferably 5.2~6.5nm.

9. The microcrystalline glass according to any one of the technical solutions 1-8, wherein the Young's modulus of the microcrystalline glass is $\geq$110GPa; preferably, 130GPa$\geq$ Young's modulus $\geq$110GPa; and more preferably, 130GPa$\geq$ Young's modulus $\geq$114GPa.

10. The microcrystalline glass according to any one of the technical solutions 1-9, wherein when the thickness is 0.7mm, the microcrystalline glass has the following transmission color coordinates in the CIELAB color space:

$$a^* = -0.15\sim0.15,$$

preferably -0.15 to -0.03; and

$$b^* = 0.30\sim0.90,$$

preferably 0.60 to 0.85; which is for D65 light source in SCI mode.

11. The microcrystalline glass according to any one of the technical solutions 1-10, wherein when the thickness is 0.7mm and under the light with a wavelength of 550nm, the microcrystalline glass has a transmittance above 85.0%, preferably the transmittance is 88.0%~95.0%; when the thickness is 0.7mm and under the light with a wavelength of 360nm, the transmittance of the microcrystalline glass is above 70.0%.

12. The microcrystalline glass according to any one of the technical solutions 1-11, wherein the microcrystalline glass contains a compressive stress layer formed by ion exchange.

13. The microcrystalline glass according to the technical solution 12, wherein the microcrystalline glass includes a compressive stress layer, wherein the depth of the compressive stress layer is DOL_0$\geq$0. 14t, where t is the thickness of the microcrystalline glass, preferably 0.20t $\geq$ DOL_0 $\geq$ 0.15t.

14. The microcrystalline glass according to the technical solution 12 or 13, wherein the microcrystalline glass has a |CT_AV| of $\geq$ 40.0MPa, preferably 80.0MPa $\geq$ |CT_AV| $\geq$40.0MPa.

15. The microcrystalline glass according to any one of the technical solutions 12-14, wherein the microcrystalline glass is obtained by chemical strengthening treatment in a salt bath containing potassium salt and/or sodium salt, wherein the salt

**EP 4 624 434 A1**

bath contains 0~1wt% lithium salt; preferably, the microcrystalline glass is obtained by chemical strengthening treatment in a mixed salt bath of sodium salt and potassium salt or a pure sodium salt bath; and further preferably, the microcrystalline glass is obtained by chemical strengthening treatment in a mixed salt bath of sodium nitrate and potassium nitrate or a sodium nitrate salt bath.

16. The microcrystalline glass according to the technical solution 15, wherein the concentration of sodium nitrate is 30~70wt% in the mixed salt bath of sodium nitrate and potassium nitrate.

17. The microcrystalline glass according to any one of the technical solutions 12-16, wherein the Vickers hardness of the microcrystalline glass is above 750kgf/mm$^2$, and/orthe fracture toughness of the microcrystalline glass is above 1.200MPa·m$^{1/2}$, preferably above 1.400MPa·m$^{1/2}$, and more preferably above 1.500MPa·m$^{1/2}$.

18. The microcrystalline glass according to any one of the technical solutions 12-17, wherein at a thickness of 0.7mm, the microcrystalline glass is performed on anti-abrasive-paper drop testing by using 80-mesh abrasive paper, and the average anti-abrasive-paper drop height of the microcrystalline glass is greater than or equal to 0.80m, preferably the average anti-abrasive-paper drop height is 1.00~1.60m.

19. The preparation method of the microcrystalline glass according to any one of the technical solutions 1-11 is characterized by including the following steps:

(1) preparation of base glass: based on the mole percentage of oxides, the base glass contains the following proportions of oxide components: $SiO_2$: 38.00%~50.00%, $Al_2O_3$: 25.00%~30.00%,

MgO: 4.00%~8.00%, ZnO: 8.00%~14.00%, $ZrO_2$: 3.00%~5.00%,

$Li_2O$: 3.00%~8.00% (excluding 8.00mol%);

and the base glass does not contain $TiO_2$; and
the content of the oxide components of the base glass satisfies the following relational expressions:

$Al_2O_3/(MgO+ZnO)=1.40~2.00$;

$(K_2O+Li_2O+Na_2O+B_2O_3)/(SiO_2+ Al_2O_3)=0.10~0.20$;

(2) preparation of microcrystalline glass: the base glass obtained in step (1) is subjected to heat treatment to obtain the microcrystalline glass according to any one of the technical solutions 1-11.

20. The preparation method according to the technical solution 19, wherein in step (2), the heat treatment includes a nucleation treatment and a crystallization treatment carried out sequentially, wherein the temperature of the nucleation treatment is 650°C~850°C, preferably 650°C~750°C, and the duration of the nucleation treatment is 0h~72h, preferably 0h~24h; the temperature of the crystallization treatment is 700°C~1000°C, preferably 700°C~800°C, and the duration of the crystallization treatment is 0.1h~72h, preferably 0.1h~24h.

21. The preparation method according to the technical solution 19 or 20, wherein in terms of the mole percentage of oxides, the base glass further contains oxide components in the following proportions: $Na_2O$: 0%~6.00%, $K_2O$: 0%~3.00%, $B_2O_3$: 0%~6.00%, BaO: 0%~4.00%, $Y_2O_3$: 0%~2.00%, and $La_2O_3$: 0%~2.00%; and/or the content of oxide components, in terms of mol%, satisfies at least one of the following relational expressions: $Al_2O_3/SiO_2=0.50~0.80$; $Li_2O/(K_2O+Li_2O+Na_2O)=0.25~0.85$; $Li_2O+Na_2O \geq 7.00mol\%$.

22. The preparation method according to any one of the technical solutions 19-21, wherein the method further includes the following step:
performing chemical strengthening treatment on the microcrystalline glass obtained by heat treatment, so as to obtain the microcrystalline glass according to any one of the technical solutions 12-18.

23. A microcrystalline glass obtained by the preparation method according to any one of the technical solutions 19-22.

24. Use of the microcrystalline glass according to any one of the technical solutions 1-18 or the microcrystalline glass according to the technical solution 23 in a mobile phone display screen, a tablet computer display screen, a handheld game console, an electronic terminal, a portable digital device, a vehicle-mounted central control screen, an electronic whiteboard glass, a smart home touch screen, a vehicle windshield glass, an aerocraft windshield glass or an aircraft windshield glass.

25. A base glass, wherein the base glass can be configured to prepare the microcrystalline glass according to any one of the technical solutions 1-18, in terms of the mole percentage of oxides, the base glass contains oxide components in the following proportions: $SiO_2$: 38.00%~50.00%, $Al_2O_3$: 25.00%~30.00%, MgO: 4.00%~8.00%, ZnO: 8.00%~14.00%, $ZrO_2$: 3.00%~5.00%, $Li_2O$: 3.00%~8.00% (excluding 8.00mol%); and the base glass does not contain $TiO_2$, wherein the content

of the oxide components of the base glass satisfies the following relational expressions: $Al_2O_3/(MgO+ZnO)=1.40\sim2.00$; $(K_2O+Li_2O+Na_2O+B_2O_3)/(SiO_2+Al_2O_3)=0.10\sim0.20$.

26. The base glass according to the technical solution 25, wherein in terms of the mole percentage of oxides, the base glass further contains oxide components in the following proportions: $Na_2O$: 0%~6.00%, $K_2O$: 0%~3.00%, $B_2O_3$: 0% ~6.00%, $BaO$: 0%~4.00%, $Y_2O_3$: 0%~2.00%, and $La_2O_3$: 0%~2.00%; and/or the content of oxide components, in terms of mol%, satisfies at least one of the following relational expressions: $Al_2O_3/SiO_2=0.50\sim0.80$; $Li_2O/(K_2O+Li_2O+Na_2O)$ $=0.25\sim0.85$; $Li_2O+Na_2O\geq7.00$ mol%.

In the present invention, the molding methods for the base glass include but are not limited to floating, overflowing, calendering or casting processes. Exemplarily, the base glass is obtained by mixing evenly the components according to the formula, melt molding, and then cooling and annealing. When preparing the base glass, a clarifying agent can be added to the base glass, wherein the clarifying agent includes but is not limited to $SnO_2$, $Sb_2O_3$ and NaCl. Based on the mass of the base glass, the amount of the added clarifying agent is from 0.01wt% to 2.00wt%, and preferably from 0.01wt% to 1.50wt%.

The technical solution of the present invention has the following beneficial effects: according to the transparent colorless spinel microcrystalline glass of the present invention, the contents of oxides such as $Al_2O_3$, $Li_2O$, $Na_2O$, $B_2O_3$, $ZrO_2$ are matched reasonably, and the contents of individual oxides meet the requirements of a specific relationship, so that in the case of adopting $ZrO_2$ as a nucleating agent and basically not adopting $TiO_2$ as a nucleating agent, the target microcrystalline glass with specific structure, good overall uniformity and high intrinsic strength can be obtained with a relatively low heat treatment temperature. According to the optimized spinel microcrystalline glass formulation of the present invention, the heat treatment temperature required for preparing the target microcrystalline glass can be significantly reduced, so as to meet the development requirements of energy saving and carbon reduction in the industry, such that the mass producibility of transparent colorless spinel microcrystalline glass is improved, and the excellent optical properties of the microcrystalline glass are ensured; and meanwhile, the microcrystalline glass has high Young's modulus and hardness, and chemically strengthened microcrystalline glass with excellent drop resistance can be obtained by performing chemical strengthening on the microcrystalline glass.

**BRIEF DESCRIPTION OF THE DRAWINGS**

FIG. 1 is a DSC test graph of base glass D3.
FIG. 2 is a DSC test graph of base glass D4.
FIG. 3 is a DSC test graph of base glass S3.
FIG. 4 is a DSC test graph of base glass S5.
FIG. 5 is a brick-forming picture of base glass D1.
FIG. 6 is a picture of a microcrystalline glass sample corresponding to Experiment No. 3.
FIG. 7 is an XRD test graph of a microcrystalline glass corresponding to Experiment No. 19.
FIG. 8 is a picture of a microcrystalline glass sample corresponding to Experiment No. 18.

**DETAILED DESCRIPTION OF EMBODIMENTS**

In the present invention, in view of the difficulty of mass production of transparent spinel microcrystalline glass, and the technical problems of the microcrystalline glass in the direction of both excellent transparency and excellent mechanical properties (especially drop resistance) in the prior art, by adjusting the formulation composition of the microcrystalline glass, and exploring the specific process parameters, a transparent colorless spinel microcrystalline glass is provided with the heat treatment temperature below 800°C, and the microcrystalline glass has excellent optical properties and can be chemically strengthened to obtain excellent deep stress characteristics.

In the first aspect, a microcrystalline glass is provided in the present invention, which satisfies the following items.

(1) The crystalline phase of the microcrystalline glass of the present invention includes zinc-magnesium-spinel solid solution $(Zn, Mg)Al_2O_4$ and tetragonal zirconia $ZrO_2$, wherein the principal crystalline phase is zinc-magnesium-spinel solid solution $(Zn, Mg) Al_2O_4$.

(2) Based on the mole percentage of oxides, the microcrystalline glass contains the following proportions of oxide components: $SiO_2$: 38.00%~50.00%, $Al_2O_3$: 25.00%~30.00%, MgO: 4.00%~8.00%, ZnO: 8.00%~14.00%, $ZrO_2$: 3.00%~5.00%, $Li_2O$: 3.00%~8.00% (excluding 8.00mol%).

(3) $Al_2O_3/(MgO+ZnO)=1.40\sim2.00$.

(4) $(K_2O+Li_2O+Na_2O+B_2O_3)/(SiO_2+Al_2O_3)=0.10\sim0.20$.

(5) $Al_2O_3/SiO_2=0.50\sim0.80$.

(6) $Li_2O/(K_2O+Li_2O+Na_2O)=0.25\sim0.85$.

(7) $Li_2O+Na_2O\geq7.00mol\%$.

Note: In the relational expressions between (3) and (7), the mole percentage content of each oxide is brought into the relational expressions for calculation.

(8) The nucleating agent contains $ZrO_2$, which basically does not contain $TiO_2$, wherein "basically free" means that $TiO_2$ is not actively added or dosed into the glass, but can be present in very small amounts as an impurity or contaminant.

(9) When preparing the microcrystalline glass, the upper temperature limit for heat treatment can be lower than or equal to 800°C, that is, the microcrystalline glass can be obtained by heat treatment at a temperature no higher than 800°C

(10) Based on the mole percentage of oxides, the base glass contains the following proportions of oxide components: $Na_2O$ 0%~6.00%, $K_2O$: 0%~3.00%, $B_2O_3$: 0%~6.00%, BaO: 0%~4.00%, $Y_2O_3$: 0%~2.00%, and $La_2O_3$: 0%~2.00%.

(11) Young's modulus >110GPa, preferably, 130GPa$\geq$ Young's modulus $\geq$110GPa, more preferably, 130GPa$\geq$ Young's modulus $\geq$114GPa.

(12) The average grain size is 3.0~30.0nm, preferably 3.0~10.0nm, more preferably 5.0~6.5nm.

(13) The weight ratio of crystal phase to microcrystalline glass is 25.0~45.0wt%, preferably 30.0~45.0wt%, more preferably 32.0~40.0wt%.

(14) When the thickness is 0.7mm, the microcrystalline glass has the following transmission color coordinates in CIELAB color space: a*= -0.15 to 0.15, and b*= 0.30 to 0.90; which is for D65 light source in SCI mode.

(15) When the thickness is 0.7mm and under the light with a wavelength of 550nm, the microcrystalline glass has a transmittance above 85.0%, preferably the transmittance is 88.0%~95.0%; when the thickness is 0.7mm and under the light with a wavelength of 360nm, the transmittance of the microcrystalline glass is above 70.0%.

(16) The microcrystalline glass contains a compressive stress layer formed by ion exchange, wherein the depth of the compressive stress layer DOL_0 is greater than or equal to 0.14t, and t is the thickness of the microcrystalline glass. For example, when t=0.7mm, the depth of the compressive stress layer DOL_0 of the microcrystalline glass is greater than or equal to 98$\mu$m, preferably 100~140$\mu$m. The compressive stress layer extends from the surface of the microcrystalline glass to the depth of compression, and a tensile stress layer capable of achieving force balance with the compressive stress layer is formed inside the microcrystalline glass. It should be understood that after the ion exchange process, the composition at the surface of the microcrystalline glass (for example, the compressive stress layer) can be different from the composition of the newly formed microcrystalline glass (i.e., the microcrystalline glass before the ion exchange process). This is because during ion exchange, one type of alkali metal ions (for example, $Li^+$ or $Na^+$) in the newly formed microcrystalline glass is replaced by larger alkali metal ions (for example, $Na^+$ or $K^+$) respectively. However, in the embodiment, the composition of the microcrystalline glass at or near the depth-wise center of the glass product (for example, the tensile stress layer) will still retain the composition of the newly formed microcrystalline glass.

(17) When performing chemical strengthening on the microcrystalline glass, the chemical strengthening treatment can be carried out in a salt bath of potassium salt and/or sodium salt, wherein the salt bath can contain 0~1wt% of lithium salt, preferably the chemical strengthening treatment can be carried out in a mixed salt bath of sodium salt and potassium salt or a pure sodium salt bath, and further preferably, the chemical strengthening treatment can be carried out in a mixed salt bath of sodium nitrate and potassium nitrate or a sodium nitrate salt bath, so as to obtain the microcrystalline glass with the absolute value of the average tensile stress |CT_AV|$\geq$40.0MPa, preferably 80.0MPa$\geq$| CT_AV|$\geq$40.0MPa. When the chemical strengthening treatment adopts a mixed salt bath of sodium nitrate and potassium nitrate, the concentration of sodium nitrate in the mixed salt bath is preferably 30~70wt%.

(18) After chemical strengthening treatment, the Vickers hardness of the microcrystalline glass is above 750kgf/mm$^2$, and/or the fracture toughness of the microcrystalline glass is above 1.200MPa·m$^{1/2}$, preferably above 1.400MPa·m$^{1/2}$, and more preferably above 1.50MPa·m$^{1/2}$.

(19) At the thickness of 0.7mm, the microcrystalline glass containing a compressive stress layer was performed on anti-abrasive-paper drop testing by using 80-mesh abrasive paper, and the average anti-abrasive-paper drop height of the microcrystalline glass is greater than or equal to 0.80m, preferably the average anti-abrasive-paper drop height is 1.00~1.60m.

According to the transparent colorless spinel microcrystalline glass of the present invention, the contents of oxides such as $Al_2O_3$, $Li_2O$, $Na_2O$, $B_2O_3$, $ZrO_2$ are matched reasonably, the items of $Al_2O_3\geq25.00mol\%$, and $Li_2O=3.00\sim8.00mol\%$ (excluding 8.00mol%) are satisfied. $ZrO_2$ is adopted as a nucleating agent, and $TiO_2$ is basically not adopted as a nucleating agent, and the content of each oxide meets the specific relationship requirements, such as $Al_2O_3/(MgO+ZnO)=1.40\sim2.00$, $(K_2O+Li_2O+Na_2O+B_2O_3)/(SiO_2+Al_2O_3)=0.10\sim0.20$, so that the target microcrystalline glass with specific structure, good overall uniformity and high intrinsic strength can be obtained with a relatively low heat treatment temperature (for example, the upper temperature limit for heat treatment does not exceed 800°C). According to the optimized spinel microcrystalline glass formulation of the present invention, the heat treatment temperature required for preparing the target microcrystalline glass can be significantly reduced, so as to meet the development requirements of energy saving and carbon reduction in the industry; the preparation of transparent zinc-magnesium-spinel microcrystalline glass at a heat treatment temperature lower than 800°C is realized, so as to improve the mass producibility of transparent spinel microcrystalline glass, and ensure the excellent optical properties of the microcrystalline glass. At the same time, the microcrystalline glass of the present invention has high Young's modulus and hardness, and chemically strengthened microcrystalline glass with excellent drop resistance can be obtained by performing chemical strengthening on the microcrystalline glass.

The base glass of the microcrystalline glass of the present invention can be directly produced by adopting existing molding processes, including but not limited to floating method, calendering method, casting method and overflowing method.

The function of oxides

Increasing the contents of $Li_2O$ and $Na_2O$ helps to obtain higher stress, especially the excellent deep stress characteristics, and at the same time helps to reduce the melting temperature and the temperature of crystal precipitation. However, the excessive addition will lead to the precipitation of other impurity phases during the heat treatment process, which will reduce the transmittance of the obtained microcrystalline glass. In the microcrystalline glass of the present invention, the content of $Li_2O$ is 3.00~8.00mol% (excluding 8.00mol%), and the content of $Na_2O$ is 0~6.00mol%.

In some embodiments, the microcrystalline glass can contain $Li_2O$ with the molar percentages of 3.00mol% ~7.90mol%, 3.50mol%~7.90mol%, 4.00mol%~7.90mol%, 4.50mol%~7.90mol%, 5.00mol%~7.90mol%, 5.50mol% ~7.90mol%, 6.00mol%~7.90mol%, 6.50mol%~7.90mol%, 7.00mol%~7.90mol%, 3.00mol%~7.50mol%, 3.00mol% ~7.00mol%, 3.00mol%~6.50mol%, 3.00mol%~6.00mol%, 3.00mol%~5.50mol%, 3.00mol%~5.00mol%, 3.00mol% ~4.50mol%, 3.00mol%~4.00mol%. In some embodiments, the microcrystalline glass can contain $Li_2O$ with the molar percentage of 3.00mol%, 3.50mol%, 4.00mol%, 4.50mol%, 5.00mol%, 5.50mol%, 6.00mol%, 6.50mol%, 7.00mol%, 7.50mol%, or 7.90mol%, or the molar percentage that is within the range of values including the endpoints of any two specific values described above. It should be understood that in a specific embodiment, any of the above ranges can be combined with any other range, as long as the glass with the required properties of the present invention can be obtained.

In some embodiments, the microcrystalline glass can contain $Na_2O$ with a molar percentage of 0~6mol%, and specifically, the molar percentage content of $Na_2O$ can be 0.5mol%~5.5mol%, 0.5mol%~5mol%, 0.5mol%~4.5mol%, 0.5mol%~4mol%, 0.5mol%~3.5mol%, 0.5mol%~3.0mol%, 0.5mol%~2.5mol%, 0.5mol%~2.0mol%, 0.5mol%~1.5mol%, 0.5mol%~1.0mol%, etc., and the molar percentage content of $Na_2O$ can further be mole percentage contents such as 0.5mol%, 1.0mol%, 1.5mol%, 2.0mol%, 2.5mol%, 3.5mol%, 4.0mol%, 4.5mol%, 5.0mol%, 5.5mol%, and 6.0mol%, or a mole percentage content within a numerical range with any two specific values described above as endpoints. It should be understood that in a specific embodiment, any of the above ranges can be combined with any other range, as long as the glass with the required performance of the present invention can be obtained.

The addition of $Al_2O_3$ can promote the precipitation of spinel, inhibit the precipitation of quartz ss and other impurity phases, and at the same time, increase the ion exchange rate in the strengthening process. However, too much $Al_2O_3$ will lead to a sharp increase in the difficulty of glass melting, while the rate of crystallization is extremely fast, which will lead to the devitrification of the glass during the normal cooling process. In the microcrystalline glass of the present invention, the content of $Al_2O_3$ is 25.00mol%~30.00mol%. Specifically, the content of $Al_2O_3$ can be a molar percentage content such as 25.00mol%, 25.50mol%, 26.00mol%, 26.50mol%, 27.00mol%, 27.50mol%, 28.00mol%, 28.50mol%, 29.00mol%, 29.50mol%, and 30.00mol%, or can be a molar percentage content within a range of values consisting of any two of the above specific values as endpoints such as 25.00mol%~29.50mol%, and 26.00mol%~28.50mol%. It should be understood that in a specific embodiment, any of the above ranges can be combined with any other range, as long as the glass with the required performance of the present invention can be obtained.

MgO and ZnO, as the main components of spinel, can promote the precipitation of spinel and reduce the difficulty of melting in a certain extent. However, the addition of excessive MgO and ZnO often leads to excessive growth of spinel grains, making the excessive size of the grain, so that it difficult to obtain microcrystalline glass with high transparency; and meanwhile, the ratio of MgO to ZnO largely determines whether the sample can be transparent. In the microcrystalline glass of the present invention, the content of MgO is 4.00mol%~8.00mol%, and the content of ZnO is 8.00mol% ~14.00mol%. Specifically, the content of MgO can be a molar percentage content such as 4.00mol%, 4.50mol%, 5.00mol%, 5.50mol%, 6.00mol%, 6.50mol%, 7.00mol%, 7.50mol%, and 8.00mol%, or can be a molar percentage content within a range of values consisting of any two of the above specific values as endpoints such as 4.00mol% ~7.50mol%, 4.00mol%~7.00mol%, 4.00mol%~6.50mol%, 4.00mol%~6.00mol%, 4.00mol%~5.50mol%, 4.50mol% ~5.00mol%, 5.00mol%~7.50mol%, 5.00mol%~7.00mol%, 5.00mol%~6.50mol%, 5.00mol%~6.00mol%, and 5.00mol%~5.50mol%. It should be understood that in a specific embodiment, any of the above ranges can be combined with any other range, as long as the glass with the required performance of the present invention can be obtained.

Specifically, the content of ZnO can be a molar percentage content such as 8.00mol%, 8.50mol%, 9.00mol%, 9.50mol%, 10.00mol%, 10.50mol%, 11.00mol%, 11.50mol%, 12.00mol%, 12.50mol%, 13.00mol%, 13.50mol%, and 14.00mol%, or can be the molar percentage content within a range of values consisting of any two of the above specific values as endpoints such as 8.00mol%~13.50mol%, 8.00mol%~13.00mol%, 8.00mol%~12.50mol%, 8.00mol%~12.00mol%, 8.00mol%~11.50mol%, 8.00mol%~11.00mol%, 8.00mol%~10.50mol%, 8.00mol%~10.00mol%, 8.00mol%~9.50mol%, 8.00mol%~9.00mol%, 8.00mol%~8.50mol%, 8.50mol%~13.50mol%, 8.50mol%~13.00mol%, 8.50mol%~12.50mol%, 8.50mol%~12.00mol%, 8.50mol%~11.50mol%, 8.50mol%~11.00mol%, 8.50mol%~10.50mol%, 8.50mol%~10.00mol%, 8.50mol%~9.50mol%, 8.50mol%~9.00mol%, 9.50mol%~13.50mol%, 9.50mol%~13.00mol%, 9.50mol%~12.50mol%, 9.50mol%~12.00mol%, 9.50mol%~11.50mol%, 9.50mol%~11.00mol%, 9.50mol%~10.50mol%, 9.50mol%~10.00mol%, 10.00mol%~13.50mol%, 10.00mol%~13.00mol%, 10.00mol%~12.50mol%, 10.00mol%~12.00mol%, 10.00mol%~11.50mol%, 10.50mol%~13.50mol%, 10.50mol%~13.00mol%, 10.50mol%~12.50mol%, 10.50mol%~12.00mol%, 10.50mol%~11.50mol%, 10.50mol%~11.00mol%, 11.00mol%~13.50mol%, 11.00mol%~13.00mol%, 11.00mol%~12.50mol%, 11.00mol%~12.00mol%, 11.00mol%~11.50mol%, 11.50mol%~13.50mol%, 11.50mol%~13.00mol%, 11.50mol%~12.50mol%, 11.50mol%~12.00mol%, 12.00mol%~13.50mol%, and 12.00mol%~13.00mol%, 12.00mol%~12.50mol%. It should be understood that in a specific embodiment, any of the above ranges can be combined with any other range, as long as the glass with the required performance of the present invention can be obtained.

$ZrO_2$ is an effective nucleating agent. When the base glass is performed on the heat treatment, $ZrO_2$ is precipitated firstly in the form of crystals, and the $ZrO_2$ crystals become the crystal nuclei for the growth of subsequent crystals. In a certain range of the composition of glass, the content of $ZrO_2$ will affect the formation of base glass, and the shape, type and size of crystals in microcrystalline glass. By adjusting the composition of the base glass, $ZrO_2$ can be preferentially precipitated, and then the spinel crystal grows at the same temperature. In the microcrystalline glass of the present invention, the content of $ZrO_2$ is 3.00mol%~5.00mol%. Specifically, the content of $ZrO_2$ can be a molar percentage content such as 3.00mol%, 3.10mol%, 3.20mol%, 3.30mol%, 3.40mol%, 3.50mol%, 3.60mol%, 3.70mol%, 3.80mol%, 3.90mol%, 4.00mol%, 4.10mol%, 4.20mol%, 4.30mol%, 4.40mol%, 4.50mol%, 4.60mol%, 4.70mol%, 4.80mol%, 4.90mol% and 5.00mol%, or can be the molar percentage content within a range of values consisting of any two of the above specific values as endpoints such as 3.10mol%~4.90mol%, 3.20mol%~3.80mol%, 3.30mol%~3.70mol%, and 3.40mol%~3.60mol%. Proper addition of $B_2O_3$ can greatly reduce the melting difficulty of glass and promote the precipitation of spinel, but excessive addition of $B_2O_3$ will easily lead to opacification during heat treatment, and at the same time, it can lead to the precipitation of other impurity crystal phases, which will seriously affect the transparency of glass. In the microcrystalline glass of the present invention, the content of $B_2O_3$ is 0~6.00mol%. Specifically, the content of $B_2O_3$ can be a molar percentage content within the range such as 0.5mol%~5.5mol%, 0.5mol%~5mol%, 0.5mol%~4.5mol%, 0.5mol%~4mol%, 0.5mol%~3.5mol%, 0.5mol%~3mol%, 0.5mol%~2.5mol%, 0.5mol%~2mol%, 0.5mol%~1.5mol%, and 0.5mol%~1mol%, or can be a molar percentage content such as 0.5mol%, 1mol%, 1.5mol%, 2.0mol%, 2.5mol%, 3.5mol%, 4mol%, 4.5mol%, 5.0mol%, 5.5mol%, and 6mol%, or can be the molar percentage content within a range of values consisting of any two of the above specific values as endpoints. It should be understood that in a specific embodiment, any of the above ranges can be combined with any other range, as long as the glass with the required performance of the present invention can be obtained.

$SiO_2$ is an oxide that forms the network skeleton of a glass and is configured to stabilize the network structure of glass and microcrystalline glass. When the content of $SiO_2$ is too low, the thermal expansion coefficient of glass tends to increase and the thermal shock resistance decreases; when the content of $SiO_2$ is too high, the fusibility of glass becomes worse, or the viscosity of molten glass liquid increases, making it difficult to clarify the glass liquid, so that the glass molding becomes more difficult, and the time required for glass crystallization becomes longer, so as to decrease the productivity. In the microcrystalline glass of the present invention, the content of $SiO_2$ is 38.00mol%~50.00mol%. Specifically, the content of $SiO_2$ can be a molar percentage content such as 38.00mol%, 38.50mol%, 39.00mol%, 39.50mol%, 40.00mol%, 40.50mol%, 41.00mol%, 41.50mol%, 42.00mol%, 42.50mol%, 43.00mol%, 43.50mol%, 44.00mol%, 44.50mol%, 45.00mol%, 45.50mol%, 46.00mol%, 46.50mol%, 47.00mol%, 47.50mol%, 48.00mol%, 48.50mol%, 49.00mol%, 49.50mol%, and 50.00mol%, or can be the molar percentage content within a range of values consisting of any two of the above specific values as endpoints such as 38.00mol%~49.50mol%, 39.00mol%~49.00mol%, 40.00mol%~48.00mol%, 41.00mol%~47.00mol%, 42.00mol%~46.00mol%, 43.00mol%~45.00mol%, 43.00mol%~44.00mol%, and 38.50mol%~49.50mol%. It should be understood that in a specific embodiment, any of the above ranges can be combined with any other range, as long as the glass with the required performance of the present invention can be obtained.

$K_2O$ is an oxide outside the network. Because the radius of $K^+$ is larger than that of $Na^+$, adding $K_2O$ in a proper amount can reduce the tendency of crystallization of the glass and increase the transparency and luster of glass. However, when the content of $K_2O$ is too high, the crystallization ability of the glass becomes stronger, the glass is easy to lose its transparency, and the crystallized glass is easy to be damaged. In the microcrystalline glass of the present invention, the content of $K_2O$ is 0~3.00mol%. Specifically, the content of $K_2O$ can be molar percentage content within a range such as 0.1mol%-3.0mol%, 0.5mol%~2.5mol%, 0.5mol%~2.0mol%, 0.5mol%~1.5mol%, 0.5mol%~1.0mol%, 1.0mol%~2.5mol%, 1.0mol%~2.0mol%, and 1.0mol%~1.5mol%, or can be a molar percentage content such as 0.5mol%, 0.6mol%, 0.7mol%, 0.8mol%, 0.9mol%, 1.0mol%, 1.1mol%, 1.2mol%, 1.3mol%, 1.4mol%, 1.5mol%, 1.6mol%, 1.7mol%, 1.8mol%, 1.9mol%, 2.0mol%, 2.1mol%, 2.2mol%, 2.3mol%, 2.4mol%, 2.5mol%, 2.6mol%, 2.7mol%, 2.8mol%, 2.9mol%, and 3.0mol%, or can be the molar percentage content within a range of values consisting of any two of the above specific values as endpoints. It should be understood that in a specific embodiment, any of the above ranges can be combined with any other range, as long as the glass with the required performance of the present invention can be obtained.

A proper amount of BaO is beneficial to reduce the viscosity of glass, improve the fusibility and formability of glass, and can also be configured to adjust the thermal expansion coefficient and the refractive index of microcrystalline glass. In the microcrystalline glass of the present invention, the content of BaO is 0~4.00mol%. Specifically, the content of BaO can be molar percentage content within a range such as 0.1mol%~4.0mol%, 0.5mol%~3.5mol%, 0.5mol%~3.0mol%, 0.5mol%~2.5mol%, 0.5mol%~2.0mol%, 0.5mol%~1.5mol%, 0.5mol%~1.0mol%, 1.0mol%~3.5mol%, 1.0mol%~3.0mol%, 1.0mol%~2.5mol%, 1.0mol%~2.0mol%, 1.0mol%~1.5mol%, 1.5mol%~3.5mol%, 1.5mol%~3.0mol%, 1.5mol%~2.5mol%, and 1.5mol%~2.0mol%, or can be a molar percentage content such as 0.5mol%, 0.6mol%, 0.7mol%, 0.8mol%, 0.9mol%, 1.0mol%, 1.1mol%, 1.2mol%, 1.3mol%, 1.4mol%, 1.5mol%, 1.6mol%, 1.7mol%, 1.8mol%, 1.9mol%, 2.0mol%, 2.1mol%, 2.2mol%, 2.3mol%, 2.4mol%, 2.5mol%, 2.6mol%, 2.7mol%, 2.8mol%, 2.9mol%, 3.0mol%, 3.1mol%, 3.2mol%, 3.3mol%, 3.3mol%, 3.4mol%, 3.5mol%, 3.6mol%, 3.7mol%, 3.8mol%, 3.9mol%, and 4.0mol%, or can be the molar percentage content within a range of values consisting of any two of the above specific values as endpoints. It should be understood that in a specific embodiment, any of the above ranges can be combined with any other range, as long as the glass with the required performance of the present invention can be obtained.

An appropriate amount of $Y_2O_3$ and/or $La_2O_3$ can enhance the densification degree of the glass phase, thereby enhancing the overall strength of the microcrystalline glass, and at the same time, it can form a eutectic with $ZrO_2$ to reduce the inhomogeneity caused by the sediment of $ZrO_2$ when melting in the furnace. However, the excessive content of $Y_2O_3$ will affect the precipitation of spinel crystals. In the microcrystalline glass of the present invention, the content of $Y_2O_3$ is 0~2mol% and the content of $La_2O_3$ is 0~2mol%. Specifically, the content of $Y_2O_3$ and $La_2O_3$ can each independently be a molar percentage content within range such as 0.1mol%~2.0mol%, 0.1mol%~1.5mol%, 0.1mol%~1.0mol%, 0.2mol%~2.0mol%, 0.2mol%~1.5mol%, 0.2mol%~1.0mol%, 0.3mol%~2.0mol%, 0.3mol%~1.5mol%, 0.3mol%~1.0mol%, 0.4mol%~2.0mol%, 0.4mol%~1.5mol%, 0.4mol%~1.0mol%, 0.5mol%~2.0mol%, 0.5mol%~1.5mol%, 0.5mol%~1.0mol%, 0.6mol%~2.0mol%, 0.6mol%-1.5mol%, 0.6mol%~1.0mol%, 0.7mol%~2.0mol%, 0.7mol%~1.5mol%, 0.7mol%~1.0mol%, 0.8mol%~2.0mol%, 0.8mol%~1.5mol%, 0.8mol%~1.0mol%, 0.9mol%~2.0mol%, 0.9mol%~1.5mol%, and 0.9mol%~1.0mol%, or can be a molar percentage content such as 0.1mol%, 0.2mol%, 0.3mol%, 0.4mol%, 0.5mol%, 0.6mol%, 0.7mol%, 0.8mol%, 0.9mol%, 1.0mol%, 1.1mol%, 1.2mol%, 1.3mol%, 1.4mol%, 1.5mol%, 1.6mol%, 1.7mol%, 1.8mol%, 1.9mol%, and 2.0mol%, or can be the molar percentage content within a range of values consisting of any two of the above specific values as endpoints. It should be understood that in a specific embodiment, any of the above ranges can be combined with any other range, as long as the glass with the required performance of the present invention can be obtained.

It is worth mentioning that the inventors found through a large number of experiments that the addition of $Al_2O_3$, $ZrO_2$, MgO, ZnO, $Na_2O$, $K_2O$ $Li_2O$ and $SiO_2$ has different effects on the temperature of crystallization. For example, $SiO_2$ will reduce the temperature of crystallization of spinel, $Al_2O_3$ will increase the temperature of crystallization of spinel, and the degree of the effect of each oxide on the temperature of crystallization is also different. For example, $Al_2O_3$ and $SiO_2$ have the greatest influence, followed by $Li_2O$ and $B_2O_3$. The inventors reasonably match the contents of oxides such as $Al_2O_3$, $Li_2O$, $Na_2O$, $B_2O_3$, and $ZrO_2$ to meet specific relational requirements, such as $Al_2O_3/(MgO+ZnO)=1.40~2.00$ and $(K_2O+Li_2O+Na_2O+B_2O_3)/(SiO_2+Al_2O_3)=0.10~0.20$, $Al_2O_3/SiO_2=0.50~0.80$, $Li_2O/(K_2O+Li_2O+Na_2O)=0.25~0.85$, and $Li_2O+Na_2O\geq7.00mol\%$, such that the heat treatment temperature required to prepare the target microcrystalline glass can be reduced, and the preparation of transparent zinc-magnesium-spinel microcrystalline glass with high intrinsic strength can be realized at the heat treatment temperature below 800°C, so as to improve the mass producibility of transparent spinel microcrystalline glass, and ensure the excellent optical properties of the target microcrystalline glass. At the same time, the microcrystalline glass of the present invention has high Young's modulus and hardness, and chemically strengthened microcrystalline glass with excellent drop resistance can be obtained by performing chemical strengthening on the microcrystalline glass.

In the second aspect, a preparation method for the above-mentioned microcrystalline glass is provided in the present invention, which includes the following steps.

(1) Preparation of base glass: based on the mole percentage of oxides, the base glass contains the following proportions of oxide components: $SiO_2$: 38.00%~50.00%, $Al_2O_3$: 25.00%~30.00%, MgO: 4.00%~8.00%, ZnO: 8.00%~14.00%, $ZrO_2$: 3.00%~5.00%, $Li_2O$: 3.00%~8.00% (excluding 8.00mol%);

and the base glass does not contain $TiO_2$, wherein
the oxide component content of the base glass satisfies the following relational expressions:

$$Al_2O_3/(MgO+ZnO)=1.40\sim2.00;$$

$$(K_2O+Li_2O+Na_2O+B_2O_3)/(SiO_2+Al_2O_3)=0.10\sim0.20.$$

(2) Preparation of microcrystalline glass: the base glass obtained in step (1) is subjected to heat treatment to obtain the above-mentioned microcrystalline glass.

In some alternative embodiments of the present invention, in step (2), the heat treatment includes a nucleation treatment and a crystallization treatment carried out sequentially, wherein the temperature of the nucleation treatment is 650°C~850°C, preferably 650°C~750°C, and the duration of the nucleation treatment is 0h~72h, preferably 0h~24h; and the temperature of the crystallization treatment is 700°C~1000°C, preferably 700°C~800°C, and the duration of the crystallization treatment is 0.1h~72h, preferably 0.1h~24h.

In some alternative embodiments of the present invention, based on the mole percentage of oxides, the base glass further contains the following proportions of oxide components: $Na_2O$: 0%~6.00%, $K_2O$: 0%~3.00%, $B_2O_3$: 0%~6.00%, BaO: 0%~4.00%, $Y_2O_3$: 0%~2.00%, $La_2O_3$: 0%~2.00%; and/or the content of oxide components, in terms of mol%, satisfies at least one of the following relational expressions: $Al_2O_3/SiO_2=0.50\sim0.80$; $Li_2O/(K_2O+Li_2O+Na_2O)=0.25\sim0.85$; and $Li_2O+Na_2O\geq7.00$mol%.

In some alternative embodiments of the present invention, the preparation method for the microcrystalline glass further includes the following step:
performing chemical strengthening treatment on the microcrystalline glass obtained by heat treatment, so as to obtain the microcrystalline glass containing a compressive stress layer.

In the third aspect, a base glass that can be configured to prepare the above-mentioned microcrystalline glass is provided in the present invention, and based on the mole percentage of oxides, the base glass contains oxide components in the following proportions: $SiO_2$: 38.00%~50.00%, $Al_2O_3$: 25.00%~30.00%, MgO: 4.00%~8.00%, ZnO: 8.00%~14.00%, $ZrO_2$: 3.00%~5.00%, $Li_2O$: 3.00%~8.00% (excluding 8.00mol%); and the base glass does not contain $TiO_2$, wherein the oxide component content of the base glass satisfies the following relational expressions: $Al_2O_3/(MgO+ZnO)=1.40\sim2.00$; $(K_2O+Li_2O+Na_2O+B_2O_3)/(SiO_2+Al_2O_3)=0.10\sim0.20$.

In some alternative embodiments of the present invention, based on the mole percentage of oxides, the base glass further contains oxide components in the following proportions: $Na_2O$: 0%~6.00%, $K_2O$: 0%~3.00%, $B_2O_3$: 0%~6.00%, BaO: 0%~4.00%, $Y_2O_3$: 0%~2.00%, $La_2O_3$: 0%~2.00%; and/or the content of oxide components, in terms of mol%, satisfies at least one of the following relational expressions: $Al_2O_3/SiO_2=0.50\sim0.80$; $Li_2O/(K_2O+Li_2O+Na_2O)=0.25\sim0.85$; $Li_2O+Na_2O\geq7.00$mol%.

In the present invention, the molding methods for the base glass include but are not limited to floating, overflowing, calendering or casting processes. Exemplarily, the base glass is obtained by mixing evenly the components according to the formula, melt molding, and then cooling and annealing. When preparing the base glass, a clarifying agent can be added to the base glass, wherein the clarifying agent includes but is not limited to $SnO_2$, $Sb_2O_3$ and NaCl. Based on the mass of the base glass, the amount of the added clarifying agent is from 0.01wt% to 2.00wt%, and preferably from 0.01wt% to 1.50wt%.

In the fourth aspect, use of the above-mentioned microcrystalline glass in a mobile phone display screen, a tablet computer display screen, a handheld game console, an electronic terminal, a portable digital device, a vehicle-mounted central control screen, an electronic whiteboard glass, a smart home touch screen, a vehicle windshield glass, an aerocraft windshield glass or an aircraft windshield glass is provided in the present invention.

Explanation for the terms

1. Microcrystalline glass: also known as glass ceramics, is a kind of solid composite material containing both glass phase and crystal phase, which is prepared by targeted and controlled heat treatment for base glass. The crystal phase here is also referred to in other literature as the microcrystalline phase, crystalline phase, or the phase of crystal.
2. Base glass: refers to glass that has not been performed on nucleation treatment, crystallization treatment or strengthening treatment.
3. Chemically strengthened microcrystalline glass: refers to the solid composite material obtained by performing the chemical strengthening treatment on microcrystalline glass. When the high-temperature chemical strengthening treatment is performed, alkali metal ions with larger ionic radii (e.g., potassium ions, sodium ions) in the salt bath/molten salt replace alkali metal ions with smaller ionic radii (e.g., sodium ions, lithium ions) in the microcrystalline glass, resulting in an ion-exchange volume difference, so as to produce the compressive stress on the surface of the microcrystalline glass.

4. DOL_0: the depth of compressive stress layer, also known as the depth of compressive layer, refers to the distance from the surface of the glass to the position close to the surface where the compressive stress is zero.

5. |CT_AV|: the absolute value of the average tensile stress in the tensile stress layer, specifically refers to the absolute value of the average value of all tensile stresses in the tensile stress layer.

Test method:

1. Test conditions of |CT_AV| and DOL_0: SLP-2000 from Orihara, Japan is adopted for the test. The wavelength of the light source is 518nm, SOC=25.5(nm/cm)/MPa, the refractive index=1.60, and the exposure time is 300usec, wherein SOC is the photoelastic coefficient, and photoelasticity mainly refers to the phenomenon of the anisotropic birefringence of transparent materials after being stressed. The value of residual stress (MPa) inside the materials can be obtained through the coefficient of photoelasticity and the measurement of birefringence.

2. Thickness of glass: is determined by micrometer testing. Before and after chemical strengthening, the degree of ion exchange in the thickness direction of the glass sample changes in gradient from the surface to the center and the whole exchange capacity of Na-K and/or Li-Na is generally not more than 1% of the total mass of the sample, and the difference of ion radius is of pm (picometer) level, so the expansion effect in the thickness direction is extremely slight, which can be approximately considered that the thickness is basically unchanged.

3. Differential scanning calorimetry (DSC) test: the sample is ground and then sieved through a 200-mesh sieve (Taylor standard sieve, USA); the test condition is: room temperature to 1100°C with the heating rate of 10°C/min; the testing instrument is METTLER TOLEDO TGA/DSC3+ thermogravimetric and synchronous thermal analyzer; the standard material adopted in the test is $\alpha$-Al$_2$O$_3$ powder; and the ambient temperature of the instrument is 24°C and the air humidity is 40%.

4. Average grain size: the microcrystalline glass samples are tested by adopting an X-ray diffractometer, and the resultant data obtained from the XRD test is adopted to calculate the average grain size of the samples by using Scherrer formula $D=K\lambda/(\beta\cos\theta)$, wherein $\lambda$ is the X-ray wavelength of 0.154056nm, $\beta$ is the full width at half maximum of the diffraction peak, K=0.89, and $\theta$ is the Bragg diffraction angle. Exemplarily, the file of the RAW (diffraction pattern) output from the XRD instrument is curve-fitted in Jade software, and Jade outputs a fitting report. Based on the angle $2\theta$ value and Peak FWHM value corresponding to each diffraction peak in the fitting report, with converting the Peak FWHM value to the radian system: $\beta=(FWHM/180\times3.14)$, the grain size of each diffraction peak is calculated by Scherrer formula $D=K\lambda/(\beta\cos\theta)$, and then the grain sizes are averaged to obtain the average grain size. The X-ray diffractometer adopted in the present invention is Shimadzu XRD-6100, the target material is copper, the test incidence angle range is $2\theta=10\sim80°$, the scanning speed is 6°/min, the working voltage is 40kV and the working current is 30mA.

5. Optical property test: referring to the standard of *GB/T 7962.12-2010 Test methods for colorless optical glass - Part 12: Internal transmittance,* the transmittance, a* value and b* value of microcrystalline glass are tested by professional testing instruments. The testing instrument adopted in the present invention is the spectrocolorimeter CM-3600A (Konica Minolta, Japan).

6. Crystallinity test: X-ray diffractometer is adopted to test the microcrystalline glass sample to obtain the XRD test result, and then the test result file (in RAW format) of the X-ray diffractometer is imported into the Rietveld refinement software for X-ray diffraction data (such as Gsas, Fullprof or Maud) for fitting and calculation, so that the crystallinity of the microcrystalline glass sample can be obtained, and the ratio of the fitted crystalline phase peak area to the fitted total peak area is the crystallinity. The X-ray diffractometer adopted in the present invention is Shimadzu XRD-6100, and the test incidence angle range is $2\theta=10\sim80°$, the scanning speed is 6°/min, the working voltage is 40kV and the working current is 30mA. In the present invention, the measured crystallinity of the microcrystalline glass sample is the weight ratio of the crystal phase of the microcrystalline glass to the microcrystalline glass.

7. Average anti-abrasive-paper drop height: is the value obtained by dividing the sum of anti-abrasive-paper drop heights measured by multiple glass samples by the number of samples measured, which is adopted to characterize the drop resistance of microcrystalline glass.

Taking at least 10 samples from each batch for testing, the average anti-abrasive-paper drop height is:

$$\langle h \rangle n = \frac{1}{n} \sum_{i=1}^{n} hi \quad ,$$

wherein

n is the number of sample plates of glass tested in each batch, and hi is the anti-abrasive-paper drop height of a single sample plate.

The test method of the anti-abrasive-paper drop height of the sample is as follows.

Step 1: attaching 80-mesh abrasive paper on the lower surface of the 160g model machine, and placing the model machine on the GreenMap LT-SKDL-CD drop tester.

Step 2: placing the glass sample to be tested with a length, width and thickness of 50mm×50mm×0.7mm directly under the model machine, so that the glass sample faces the abrasive paper, and making the model machine impact and drop at a certain drop height, so as to impact the glass sample directly below the model machine. If the glass sample is not broken, the drop height of the model machine is raised according to a certain rule. For example, the drop height starts from 0.4m, and a drop impact is performed on the sample once, and if it is not broken, the height of 0.1m is raised each time and dropping is performed again until the glass sample is broken.

Step 3: recording the previous drop height of the glass sample when it is broken as the anti-abrasive-paper drop height. For example, if the drop height when the glass sample is broken is 0.5m, the anti-abrasive-paper drop height of the sample is 0.4m.

8. Vickers hardness test: the plate of chemically strengthened microcrystalline glass is made into small pieces of 50mm×50mm×0.7mm, and the sample plate of glass with clean surface free of scratches, pits, cracks and other damage visible to the naked eye is selected as a specimen, and then Vickers hardness is measured by Vickers hardness tester. Three different positions on the surface of the same piece of specimen are selected for measurement, and then the average of three times of measurement is taken as the final test result. The Vickers hardness tester adopted in the present invention is a digital low-load Vickers hardness tester (Beijing Kewei Technology Co., Ltd., VTD405), with a load of 300gf and a load duration of 10s, and the validity of indentation conforms to GB/T16534.

9. Young's modulus test: Young's modulus E is a value measured by a well-known resonance method.

10. Fracture toughness test: the test is performed with reference to the test method of Vickers hardness, and the fracture toughness value is calculated by formula:

$$K_{1C} = 0.004985 * \left(\frac{E}{Hv}\right)^{0.5} * P/C^{1.5} \quad ,$$

wherein

E is Young's modulus and the unit is GPa; Hv is Vickers hardness and the unit is GPa ($1GPa=102.04kgf/mm^2$); P is the load and the unit is kg; C is the average length of crack.

11. Refractive index test: in the present invention, a single-port Abbe refractometer (WYA-2WAJ, Bell Analytical Instruments Co., Ltd.) is adopted, and the wavelength is set at 589nm to test the refractive index of the plate of the microcrystalline glass.

The microcrystalline glass of the present invention is described in detail below with specific examples.

Example

I. The base glass was prepared by melting.

1000g of raw materials were prepared according to the formula shown in Tables 2A, 2B and 2C, which were adopted as the raw material for the preparation of the base glass; then the raw materials were mixed with a V-mixer for 30 minutes, and after mixed evenly, the clarifying agent (NaCl) of 5g was added; after that, the raw materials were transferred to a platinum crucible and were melted in a lifting furnace at 1650°C for 5 hours, then the resultant was poured into a forming mold for molding and cooling, and the resultant was cooled to 900°C; then the resultant was placed in a 600°C annealing furnace for annealing for 24 hours, and then the resultant was cooled to room temperature with the furnace, so as to obtain the base glasses D1-D10 and S1- S17.

II. The base glass was performed on heat treatment to prepare the microcrystalline glass.

The base glasses D1-D10 and S1-S17 in process (1) were sequentially performed on heat treatment according to the parameter conditions shown in the heat treatment processes $R_1$-$R_{10}$ in Table 3, so as to prepare the sample brick of microcrystalline glass. The specific heat treatment processes of various base glasses and the obtained results of the states of microcrystalline glass are shown in Tables 4A, 4B, 4C and 4D, and the microcrystalline glasses with Experiment No. 1-35 are shown in Tables 4A~4D.

III. The sample plate was processed.

The sample brick of microcrystalline glass was performed on shaping, cutting and polishing, so as to obtain the sample of a desired size, such as the sample plate of microcrystalline glass with a length, width and thickness of 50mm×50mm×0.7mm.

IV. The microcrystalline glass was performed on chemical strengthening, so as to prepare the microcrystalline glass containing the compressive stress layer (that is, chemically strengthened microcrystalline glass).

The sample plate of microcrystalline glass obtained in process (3) was performed on chemical strengthening in the strengthening salt bath with the compositions shown in Tables 5A-5C and under the conditions of strengthening temperature and duration, so as to obtain the chemically strengthened microcrystalline glass. Sodium ions in the salt bath were provided by sodium nitrate and potassium ions were provided by potassium nitrate. Specifically, the composition of salt bath in Tables 5A-5C was specifically only sodium nitrate, which constituted a salt bath for strengthening, or the composition of salt bath in Tables 5A-5C was a mixture of sodium nitrate and potassium nitrate, which constituted a salt bath for strengthening, wherein when the mixture of sodium nitrate and potassium nitrate constituted a salt bath, the mass concentration of sodium nitrate ranged from 30~100wt%, and specifically can be 30~70wt%.

The physical parameters of each chemically strengthened microcrystalline glass after specific chemical strengthening are shown in Tables 5A-5C.

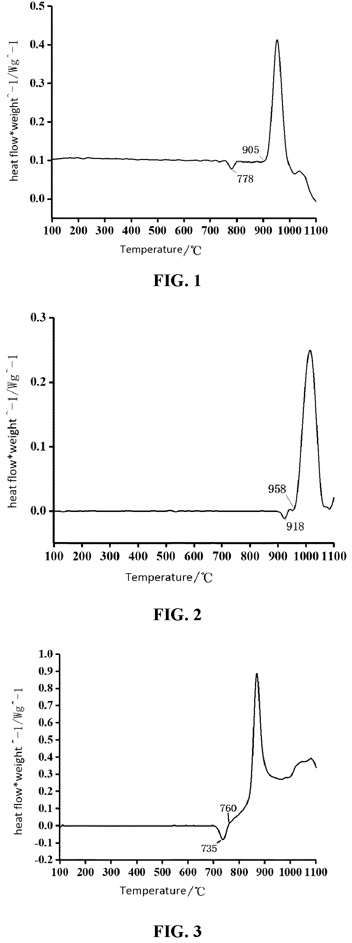

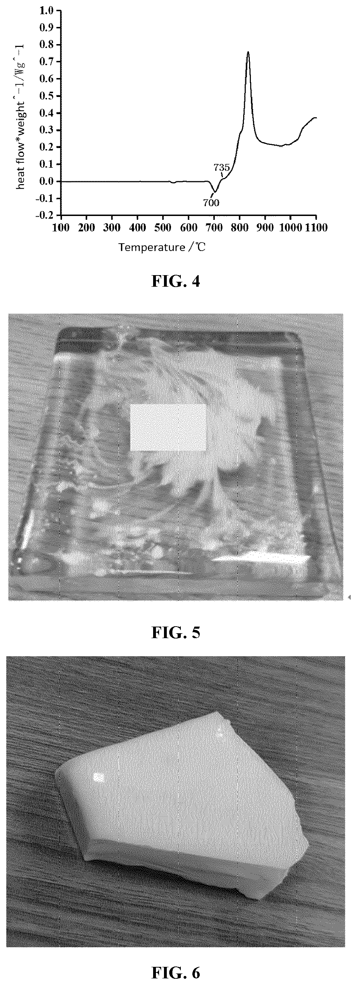

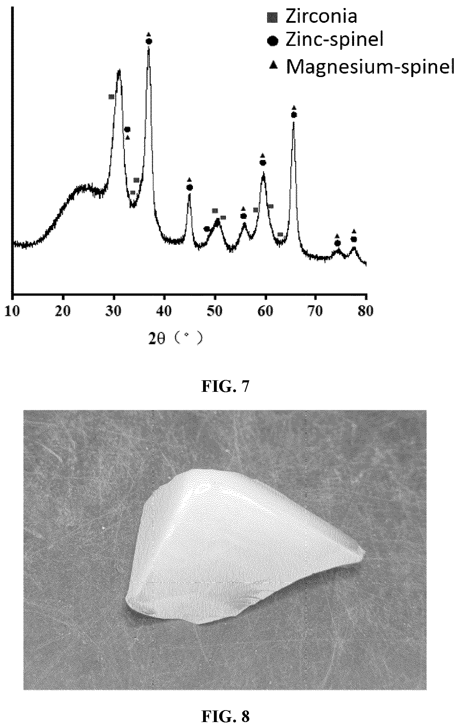

In addition, FIG. 1 is a DSC test graph of base glass D3, from which it can be seen that its nucleation temperature is about 778°C and the initial crystallization temperature is about 905°C. FIG. 2 is a DSC test graph of base glass D4, from which it can be seen that its nucleation temperature is about 918°C and the initial crystallization temperature is about 958°C. FIG. 3 is a DSC test graph of base glass S3, from which it can be seen that its nucleation temperature is about 735°C and the initial crystallization temperature is about 760°C. FIG. 4 is a DSC test graph of base glass S5, from which it can be seen that its nucleation temperature is about 700°C, and the initial crystallization temperature is about 735°C. FIG. 5 is a brick-forming picture of base glass D1, wherein since the content of Zr is too high, a large amount of white sediment is present on the surface of the base glass after melting. FIG. 6 is a picture of a microcrystalline glass sample corresponding to Experiment No. 3, and it can be seen that since the content of Li in the component is too high, a crystal of a quartz solid solution ($MgAl_2Si_3O_{10}$) appears in the crystallized microcrystalline glass, resulting in the overall devitrification of the microcrystalline glass. FIG. 7 is an XRD test graph of a microcrystalline glass corresponding to Experiment No. 19, and it can be seen that the crystallization of the microcrystalline glass is complete and has no impurity phases. FIG. 8 is a picture of a microcrystalline glass sample corresponding to Experiment No. 18, and it can be seen that since the content of Al is relatively low, a small amount of quartz crystals appear after crystallization, which appears as a fogging sample plate.

Table 2A Glass Formulation and Melting State (I)

| No. of glass formulation and corresponding composition (mol%) | D1 | D2 | D3 | D4 | D5 | D6 | D7 | D8 | D9 | D10 |
|---|---|---|---|---|---|---|---|---|---|---|
| $SiO_2$ | 44.75% | 46.61% | 53.33% | 54.18% | 40.26% | 45.63% | 45.28% | 43.34% | 38.99% | 48.39% |
| $Al_2O_3$ | 25.34% | 21.82% | 20.44% | 19.11% | 32.99% | 26.24% | 25.92% | 25.72% | 27.94% | 24.09% |
| $TiO_2$ | 0.00% | 0.00% | 0.00% | 0.88% | 0.00% | 0.00% | 0.00% | 0.00% | 0.00% | 0.00% |
| $ZrO_2$ | 5.31% | 3.71% | 3.24% | 3.19% | 3.16% | 2.92% | 4.43% | 3.46% | 3.34% | 3.57% |
| MgO | 5.80% | 7.30% | 5.48% | 5.61% | 6.07% | 5.95% | 5.92% | 5.78% | 5.57% | 5.96% |
| ZnO | 10.10% | 10.40% | 9.54% | 9.76% | 10.70% | 10.35% | 10.15% | 9.91% | 9.57% | 10.22% |
| $Na_2O$ | 3.00% | 1.66% | 2.55% | 2.61% | 1.89% | 3.08% | 3.55% | 6.08% | 3.20% | 3.14% |
| $K_2O$ | 0.00% | 0.00% | 0.00% | 0.00% | 0.00% | 0.00% | 0.19% | 0.00% | 0.00% | 0.00% |
| $Li_2O$ | 4.00% | 8.00% | 3.79% | 3.00% | 3.33% | 4.10% | 2.86% | 4.06% | 4.12% | 3.44% |
| $B_2O_3$ | 0.50% | 0.50% | 0.50% | 0.50% | 0.47% | 0.50% | 0.50% | 0.50% | 6.16% | 0.00% |
| BaO | 1.20% | 0.00% | 1.13% | 1.16% | 1.13% | 1.23% | 1.20% | 1.15% | 1.11% | 1.19% |
| $Y_2O_3$ | 0.00% | 0.00% | 0.00% | 0.00% | 0.00% | 0.00% | 0.00% | 0.00% | 0.00% | 0.00% |
| $La_2O_3$ | 0.00% | 0.00% | 0.00% | 0.00% | 0.00% | 0.00% | 0.00% | 0.00% | 0.00% | 0.00% |
| In total | 100% | 100% | 100% | 100% | 100% | 100% | 100% | 100% | 100% | 100% |
| $Al_2O_3/(MgO+ZnO)$ | 1.59 | 1.23 | 1.36 | 1.24 | 1.97 | 1.61 | 1.61 | 1.64 | 1.85 | 1.49 |
| $(K_2O+Li_2O+Na_2O+B_2O_3)/(SiO_2+Al_2O_3)$ | 0.11 | 0.15 | 0.09 | 0.08 | 0.08 | 0.11 | 0.10 | 0.15 | 0.20 | 0.09 |
| $Al_2O_3/SiO_2$ | 0.57 | 0.47 | 0.38 | 0.35 | 0.82 | 0.57 | 0.57 | 0.59 | 0.72 | 0.50 |
| $Li_2O/(K_2O+Li_2O+Na_2O)$ | 0.57 | 0.83 | 0.60 | 0.53 | 0.64 | 0.57 | 0.43 | 0.40 | 0.56 | 0.52 |
| $Li_2O+Na_2O$ | 7.00% | 9.66% | 6.34% | 5.61% | 5.22% | 7.18% | 6.41% | 10.14% | 7.32% | 6.58% |
| Melting State | Lots of white sediments | Normal | Normal | Yellowed | Lots of unmelted materials | Normal | Normal | Ceramized | Normal | Normal |

Table 2B Glass Formulation and Melting State (II)

| No. of glass formulation and corresponding composition (mol%) | S1 | S2 | S3 | S4 | S5 | S6 | S7 | S8 | S9 | S10 |
|---|---|---|---|---|---|---|---|---|---|---|
| $SiO_2$ | 45.28% | 45.58% | 44.01% | 46.53% | 39.21% | 45.68% | 38.76% | 45.12% | 44.98% | 45.36% |
| $Al_2O_3$ | 25.91% | 26.09% | 25.36% | 26.62% | 28.31% | 26.34% | 29.15% | 25.43% | 25.93% | 25.96% |
| $TiO_2$ | 0.00% | 0.00% | 0.00% | 0.00% | 0.00% | 0.00% | 0.00% | 0.00% | 0.00% | 0.00% |
| $ZrO_2$ | 3.54% | 3.57% | 4.29% | 3.64% | 3.36% | 4.45% | 3.32% | 4.30% | 4.38% | 3.55% |
| $MgO$ | 5.91% | 5.95% | 4.21% | 6.07% | 5.61% | 4.37% | 5.54% | 7.65% | 5.85% | 5.92% |
| $ZnO$ | 10.14% | 10.21% | 13.49% | 8.37% | 9.62% | 10.20% | 9.51% | 8.85% | 10.04% | 10.16% |
| $Na_2O$ | 1.58% | 3.57% | 3.43% | 3.64% | 3.02% | 3.57% | 2.98% | 3.44% | 3.51% | 1.58% |
| $K_2O$ | 0.00% | 0.00% | 0.19% | 0.00% | 0.00% | 0.19% | 0.00% | 0.19% | 0.19% | 0.00% |
| $Li_2O$ | 5.97% | 5.03% | 3.88% | 5.13% | 4.15% | 4.02% | 4.10% | 3.88% | 3.96% | 5.99% |
| $B_2O_3$ | 0.00% | 0.00% | 0.19% | 0.00% | 5.60% | 0.19% | 5.53% | 0.19% | 0.19% | 0.00% |
| $BaO$ | 0.00% | 0.00% | 0.95% | 0.00% | 1.12% | 0.99% | 1.11% | 0.95% | 0.97% | 0.00% |
| $Y_2O_3$ | 0.00% | 0.00% | 0.00% | 0.00% | 0.00% | 0.00% | 0.00% | 0.00% | 0.00% | 1.48% |
| $La_2O_3$ | 1.67% | 0.00% | 0.00% | 0.00% | 0.00% | 0.00% | 0.00% | 0.00% | 0.00% | 0.00% |
| In total | 100.00% | 100.00% | 100.00% | 100.00% | 100.00% | 100.00% | 100.00% | 100.00% | 100.00% | 100.00% |
| $Al_2O_3/(MgO+ZnO)$ | 1.61 | 1.61 | 1.43 | 1.84 | 1.86 | 1.81 | 1.94 | 1.54 | 1.63 | 1.61 |
| $(K_2O+Li_2O+Na_2O+B_2O_3)/(SiO_2+Al_2O_3)$ | 0.11 | 0.12 | 0.11 | 0.12 | 0.19 | 0.11 | 0.19 | 0.11 | 0.11 | 0.11 |
| $Al_2O_3/SiO_2$ | 0.57 | 0.57 | 0.58 | 0.57 | 0.72 | 0.58 | 0.75 | 0.56 | 0.58 | 0.57 |
| $Li_2O/(K_2O+Li_2O+Na_2O)$ | 0.79 | 0.58 | 0.52 | 0.58 | 0.58 | 0.52 | 0.58 | 0.52 | 0.52 | 0.79 |
| $Li_2O+Na_2O$ | 7.55% | 8.60% | 7.31% | 8.77% | 7.17% | 7.59% | 7.08% | 7.32% | 7.47% | 7.57% |
| Melting State | Normal | Normal | Normal | Normal | Normal | Normal | Normal | Normal | Normal | Normal |

Table 2C Glass Formulation and Melting State (III)

| No. of glass formulation and corresponding composition (mol%) | S11 | S12 | S13 | S14 | S15 | S16 | S17 |
|---|---|---|---|---|---|---|---|
| $SiO_2$ | 46.03% | 44.01% | 45.58% | 44.79% | 48.11% | 45.23% | 43.40% |
| $Al_2O_3$ | 26.35% | 25.00% | 26.09% | 25.40% | 25.38% | 25.88% | 25.15% |
| $TiO_2$ | 0.00% | 0.00% | 0.00% | 0.00% | 0.00% | 0.00% | 0.00% |
| $ZrO_2$ | 3.60% | 3.44% | 3.57% | 3.50% | 3.34% | 3.54% | 3.79% |
| MgO | 6.01% | 5.74% | 5.95% | 5.85% | 5.57% | 5.90% | 5.69% |
| ZnO | 10.32% | 9.86% | 10.21% | 10.03% | 9.55% | 10.13% | 9.77% |
| $Na_2O$ | 1.61% | 5.36% | 5.55% | 4.47% | 1.49% | 1.58% | 3.41% |
| $K_2O$ | 0.00% | 0.00% | 0.00% | 2.75% | 0.00% | 0.00% | 0.00% |
| $Li_2O$ | 6.08% | 3.12% | 3.05% | 3.21% | 5.63% | 7.74% | 3.86% |
| $B_2O_3$ | 0.00% | 0.00% | 0.00% | 0.00% | 0.93% | 0.00% | 3.79% |
| BaO | 0.00% | 3.47% | 0.00% | 0.00% | 0.00% | 0.00% | 1.14% |
| $Y_2O_3$ | 0.00% | 0.00% | 0.00% | 0.00% | 0.00% | 0.00% | 0.00% |
| $La_2O_3$ | 0.00% | 0.00% | 0.00% | 0.00% | 0.00% | 0.00% | 0.00% |
| In total | 100.00% | 100.00% | 100.00% | 100.00% | 100.00% | 100.00% | 100.00% |
| $Al_2O_3/(MgO+ZnO)$ | 1.61 | 1.60 | 1.61 | 1.60 | 1.68 | 1.61 | 1.63 |
| $(K_2O+Li_2O+Na_2O+B_2O_3)/(SiO_2+Al_2O_3)$ | 0.11 | 0.12 | 0.12 | 0.15 | 0.11 | 0.13 | 0.16 |
| $Al_2O_3/SiO_2$ | 0.57 | 0.57 | 0.57 | 0.57 | 0.53 | 0.57 | 0.58 |
| $Li_2O/(K_OO+Li_2O+Na_2O)$ | 0.79 | 0.37 | 0.35 | 0.31 | 0.79 | 0.83 | 0.53 |
| $Li_2O+Na_2O$ | 7.69% | 8.48% | 8.60% | 7.68% | 7.12% | 9.32% | 7.27% |
| Melting State | Normal | Normal | Normal | Normal | Normal | Normal | Normal |

According to the data in the above tables 2A-2C, it can be seen that due to the excessive high content of $ZrO_2$, after the base glass D1 is melted, a large number of white sediments appears; due to containing $TiO_2$, the whole base glass D4 turns yellow after being melted; due to the excessive high content of $Al_2O_3$, the base glass D5 has a lot of unmelted materials during being melted; and due to the excessive high content of $Na_2O$, the base glass D8 has been ceramized after being annealed. The melting of the rest formulations is normal.

Table 3 Parameters of Heat Treatment Process

| No. of heat treatment process | Brief description | Detailed description |
|---|---|---|
| R1 | 750°C-4h | Raising the temperature from room temperature to 750°C at 10°C/min, keeping the temperature for 4 h, and then cooling down with the furnace to room temperature. |
| R2 | 790°C-4h | Raising the temperature from room temperature to 790°C at 10°C/min, keeping the temperature for 4 h, and then cooling down with the furnace to room temperature. |
| R3 | 850°C-4h | Raising the temperature from room temperature to 850°C at 10°C/min, keeping the temperature for 4 h, and then cooling down with the furnace to room temperature. |
| R4 | 900°C-4h | Raising the temperature from room temperature to 900°C at 10°C/min, keeping the temperature for 4 h, and then cooling down with the furnace to room temperature. |
| R5 | 950°C-4h | Raising the temperature from room temperature to 950°C at 10°C/min, keeping the temperature for 4 h, and then cooling down with the furnace to room temperature. |
| R6 | Nucleation temperature-4h-750°C-4h | Raising the temperature from room temperature to nucleation temperature at 10°C/min, keeping the temperature for 4h, then raising the temperature to 750°C at 10°C/min, keeping the temperature for 4h, and then cooling down with the furnace to room temperature. |
| R7 | Nucleation temperature-4h-790°C-4h | Raising the temperature from room temperature to nucleation temperature at 10°C/min, keeping the temperature for 4h, then raising the temperature to 790°C at 10°C/min, keeping the temperature for 4h, and then cooling down with the furnace to room temperature. |
| R8 | Nucleation temperature-4h-850°C-4h | Raising the temperature from room temperature to nucleation temperature at 10°C/min, keeping the temperature for 4h, then raising the temperature to 850°C at 10°C/min, keeping the temperature for 4h, and then cooling down with the furnace to room temperature. |
| R9 | Nucleation temperature-4h-900°C-4h | Raising the temperature from room temperature to nucleation temperature at 10°C/min, keeping the temperature for 4h, then raising the temperature to 900°C at 10°C/min, keeping the temperature for 4h, and then cooling down with the furnace to room temperature. |
| R10 | Nucleation temperature-4h-950°C-4h | Raising the temperature from room temperature to nucleation temperature at 10°C/min, keeping the temperature for 4h, then raising the temperature to 950°C at 10°C/min, keeping the temperature for 4h, and then cooling down with the furnace to room temperature. |
| Nucleation Temperature: After the glass is melted and annealed, the sample is sent for DSC testing. The temperature corresponding to the highest point of the endothermic peak in the DSC curve is identified as the nucleation temperature (Note: Single nucleation treatment is not always required). | | |

Table 4A Heat Treatment Process and Results of States of Microcrystalline Glass (I)

| No. of Experiment | | 1 | 2 | 3 | 4 | 5 | 6 | 7 | 8 | 9 | 10 |
|---|---|---|---|---|---|---|---|---|---|---|---|
| No. of Glass Formulation | | D2 | D2 | D2 | D2 | D3 | D3 | D3 | D3 | D4 | D4 |
| No. of Heat Treatment Process | | $R_1$ | $R_2$ | $R_5$ | $R_{10}$ | $R_2$ | $R_3$ | $R_8$ | $R_4$ | $R_3$ | $R_4$ |
| Nucleation Temperature /°C | | / | / | / | 821 | / | / | 778 | / | / | / |
| Crystal Phase | Crystal Phase A | $ZrO_2$ | $MgAl_2Si_3O_{10}$ | $MgAl_2Si_3O_{10}$ | $MgAl_2Si_3O_{10}$ | $ZrO_2$ | $(Zn, Mg)Al_2O_4$ | $(Zn, Mg)Al_2O_4$ | $(Zn, Mg)Al_2O_4$ | $ZrO_2$ | $(Zn, Mg)Al_2O_4$ |
| | Crystal Phase B | / | $(Zn, Mg)Al_2O_4$ | $(Zn, Mg)Al_2O_4$ | $(Zn, Mg)Al_2O_4$ | / | $ZrO_2$ | $ZrO_2$ | $ZrO_2$ | / | $ZrO_2$ |
| | Crystal Phase C | / | $ZrO_2$ | $ZrO_2$ | $ZrO_2$ | / | / | / | / | / | / |
| Crystallinity /wt% | | 2.3% | 65.5% | 85.8% | 63.4% | 3.8% | 17.6% | 18.3% | 35.7% | 3.2% | 16.9% |
| Avg. Grain Size /nm | | 2.1 | 35.6 | 120.3 | 32.3 | 2.4 | 4.8 | 5.1 | 6.4 | 1.9 | 5.7 |
| State after Heat Treatment | | Transparent | Severe Fogging | Ceramized | Severe Fogging | Transparent | Transparent | Transparent | Transparent | Yellowed | Browned |

EP 4 624 434 A1

Table 4B Heat Treatment Process and Results of States of Microcrystalline Glass (II)

| No. of Experiment | | 11 | 12 | 13 | 14 | 15 | 16 | 17 | 18 | 19 | 20 |
|---|---|---|---|---|---|---|---|---|---|---|---|
| No. of Glass Formulation | | D4 | D4 | D6 | D6 | D7 | D9 | D9 | D10 | S1 | S2 |
| No. of Heat Treatment Process | | $R_5$ | $R_{10}$ | $R_1$ | $R_6$ | $R_6$ | $R_1$ | $R_6$ | $R_2$ | $R_6$ | $R_6$ |
| Nucleation Temperature /°C | | / | 918 | / | 716 | 711 | / | 703 | / | 718 | 713 |
| Crystal Phase | Crystal Phase A | $(Zn, Mg)Al_2O_4$ | $(Zn, Mg)Al_2O_4$ | $(Zn, Mg)Al_2O_4$ | $(Zn, Mg)Al_2O_4$ | $(Zn, Mg)Al_2O_4$ | $(Zn, Mg)Al_2O_4$ | $(Zn, Mg)Al_2O_4$ | $(Zn, Mg)Al_2O_4$ | $(Zn, Mg)Al_2O_4$ | $(Zn, Mg)Al_2O_4$ |
| | Crystal Phase B | $ZrO_2$ | $ZrO_2$ | $ZrO_2$ | $ZrO_2$ | $ZrO_2$ | $ZrO_2$ | $ZrO_2$ | $ZrO_2$ | $ZrO_2$ | $ZrO_2$ |
| | Crystal Phase C | / | / | / | / | / | / | / | $MgAl_2Si_3O_{10}$ | / | / |
| Crystallinity /wt% | | 34.6% | 35.2% | 34.6% | 34.1% | 33.8% | 33.6% | 34.1% | 39.2% | 32.5% | 33.7% |
| Average Grain Size /nm | | 5.9 | 5.3 | 6.9 | 7.8 | 6.4 | 8.9 | 5.9 | 11.5 | 5.8 | 6.5 |
| State after Heat Treatment | | Browned | Browned | Severe Fogging | Fogging | Transparent | Fogging | Slight Fogging | Fogging | Transparent | Transparent |

Table 4C Heat Treatment Process and Results of States of Microcrystalline Glass (III)

| No. of Experiment | | 21 | 22 | 23 | 24 | 25 | 26 | 27 | 28 | 29 | 30 |
|---|---|---|---|---|---|---|---|---|---|---|---|
| No. of Glass Formulation | | S3 | S4 | S5 | S6 | S7 | S8 | S9 | S10 | S11 | S12 |
| No. of Heat Treatment Process | | $R_7$ | $R_6$ | $R_6$ | $R_6$ | $R_6$ | $R_7$ | $R_6$ | $R_6$ | $R_7$ | $R_7$ |
| Nucleation Temperature /°C | | 735 | 722 | 700 | 721 | 713 | 740 | 716 | 719 | 735 | 738 |
| Crystal Phase | Crystal Phase A | $(Zn, Mg)$ $Al_2O_4$ | $(Zn, Mg)$ $Al_2O_4$ | $(Zn, Mg)$ $Al_2O_4$ | $(Zn, Mg)$ $Al_2O_4$ | $(Zn, Mg)$ $Al_2O_4$ | $(Zn, Mg)$ $Al_2O_4$ | $(Zn, Mg)$ $Al_2O_4$ | $(Zn, Mg)$ $Al_2O_4$ | $(Zn, Mg)$ $Al_2O_4$ | $(Zn, Mg)$ $Al_2O_4$ |
| | Crystal Phase B | $ZrO_2$ | $ZrO_2$ | $ZrO_2$ | $ZrO_2$ | $ZrO_2$ | $ZrO_2$ | $ZrO_2$ | $ZrO_2$ | $ZrO_2$ | $ZrO_2$ |
| | Crystal Phase C | / | / | / | / | / | / | / | / | / | / |
| Crystallinity /wt% | | 35.8% | 33.9% | 34.1% | 34.8% | 33.9% | 34.5% | 35.9% | 36.4% | 34.2% | 35.7% |
| Average Grain Size /nm | | 5.7 | 6.4 | 5.6 | 5.3 | 5.2 | 6.2 | 5.9 | 5.5 | 5.4 | 5.9 |
| State after Heat Treatment | | Transparent | Transparent | Transparent | Transparent | Transparent | Transparent | Transparent | Transparent | Transparent | Transparent |

Table 4D Heat Treatment Process and Results of States of Microcrystalline Glass (IV)

| No. of Experiment | | 31 | 32 | 33 | 34 | 35 |
|---|---|---|---|---|---|---|
| No. of Glass Formulation | | S13 | S14 | S15 | S16 | S17 |
| No. of Heat Treatment Process | | $R_6$ | $R_7$ | $R_7$ | $R_6$ | $R_7$ |
| Nucleation Temperature /°C | | 725 | 743 | 737 | 709 | 742 |
| Crystal Phase | Crystal Phase A | $(Zn, Mg)Al_2O_4$ | $(Zn, Mg)Al_2O_4$ | $(Zn, Mg)Al_2O_4$ | $(Zn, Mg)Al_2O_4$ | $(Zn, Mg)Al_2O_4$ |
| | Crystal Phase B | $ZrO_2$ | $ZrO_2$ | $ZrO_2$ | $ZrO_2$ | $ZrO_2$ |
| | Crystal Phase C | / | / | / | / | / |
| Crystallinity /wt% | | 34.8% | 36.1% | 35.6% | 34.2% | 36.2% |
| Average Grain Size /nm | | 5.6 | 5.7 | 5.8 | 5.9 | 5.8 |
| State after Heat Treatment | | Transparent | Transparent | Transparent | Transparent | Transparent |

As shown above, due to the excessive high content of $Li_2O$ in D2, quartz solid solution ($MgAl_2Si_3O_{10}$) is easily generated during the heat treatment process, which leads to fogging and even ceramization of glass. The ceramization here refers to the uncontrollable growth of quartz crystals in microcrystalline glass during heat treatment, which causes the sample to lose the transparent property of glass and turn into a white color similar to ceramics, as shown in FIG. 6. Only the crystal phase of $ZrO_2$ is precipitated during the heat treatment in D3 under the condition of $R_2$ without the desired zinc-magnesium-spinel solid solution. At a relatively high temperature of 850°C-4h ($R_3$, conducting the crystallization treatment at 850°C), the crystallinity is only 17.6wt%. Even with the nucleation treatment ($R_8$, conducting the crystallization treatment at 850°C and conducting the nucleation treatment before crystallization treatment), the crystallinity is only 18.3wt%; only when the heat treatment is carried out at high temperature ($R_4$, conducting the crystallization treatment at 900°C), a sample with a good crystallization state can be obtained, and the crystallinity reaches 35.7wt%. The sample turns brown after heat treatment because D4 contains $TiO_2$ part. The sample is fogged after heat treatment due to the excessive low content of $ZrO_2$ in D6. However, the specific reason cannot be identified from XRD parameters, it is speculated from the literature that it can be fogged due to the aggregation of small grains. The transparent microcrystalline glass is obtained by D7. The sample is fogged after heat treatment due to the excessive high content of $B_2O_3$ in D9, which can be caused by phase separation, and the difference cannot be identified from XRD parameters. The quartz solid solution ($MgAl_2Si_3O_{10}$) appears after crystallization due to the low content of $Al_2O_3$ in D10, and the sample is fogged, as shown in FIG. 8.

Table 5A Physical Parameters and Strengthening Parameters (I)

| Experiment No. | | 8 | 12 | 15 | 17 | 19 | 20 | 21 | 22 | 23 | 24 |
|---|---|---|---|---|---|---|---|---|---|---|---|
| Glass formulation and No. of heat treatment process | | D3, $R_4$ | D4, $R_{10}$ | D7, $R_6$ | D9, $R_6$ | S1, $R_6$ | S2, $R_6$ | S3, $R_7$ | S4, $R_6$ | S5, $R_6$ | S6, $R_6$ |
| Optical property | a* (D65) | -0.08 | 0.49 | -0.11 | 0.1 | -0.05 | -0.03 | -0.08 | -0.04 | -0.08 | -0.1 |
| | b* (D65) | 0.75 | 2.52 | 0.65 | 3.56 | 0.65 | 0.64 | 0.68 | 0.86 | 0.75 | 0.69 |
| | Transmittance at 360nm/% | 71.46 | 68.59 | 72.3 | 43.6 | 75.8 | 75.9 | 73.56 | 71.23 | 72.56 | 73.41 |
| | Transmittance at 550nm/% | 89.69 | 86.96 | 89.6 | 75.4 | 90.02 | 90.05 | 89.86 | 89.31 | 89.54 | 89.79 |
| | Refractive index | 1.57 | 1.56 | 1.58 | 1.59 | 1.59 | 1.60 | 1.59 | 1.59 | 1.60 | 1.59 |
| Physical parameter | Young's modulus/GPa | 110.8 | 113.5 | 121.4 | 120.8 | 123.6 | 121.6 | 120.45 | 121.5 | 122.6 | 123.5 |
| Strengthening process | Strengthening salt bath | 100wt% $NaNO_3$ | 100wt% $NaNO_3$ | 100wt% $NaNO_3$ | 100wt% $NaNO_3$ | 100wt% $NaNO_3$ | 50wt% $NaNO_3$ +50wt% $KNO_3$ | 100wt% $NaNO_3$ | 100wt% $NaNO_3$ | 100wt% $NaNO_3$ | 100wt% $NaNO_3$ |
| | Strengthening condition (temperature+duration) | 450°C-5h | 450°C-5h | 450°C-5h | 450°C-5h | 450°C-5h | 450°C-5h | 450°C-5h | 450°C-5h | 450°C-5h | 450°C-5h |
| | \|CT_AV\|Mpa | 34.3 | 32.6 | 22.6 | 45.4 | 68.7 | 58.1 | 45.6 | 57.2 | 47.8 | 46.9 |
| | DOL_0/$\mu$m | 82.3 | 85.3 | 90.5 | 121.8 | 131.6 | 129.5 | 118.6 | 124.6 | 120.5 | 126.9 |
| | Strengthened Vickers hardness (kpf/mm$^2$) | 824 | 821 | 837 | 826 | 836 | 819 | 817 | 824 | 835 | 834 |
| | Fracture toughness\| Mpa·m$^{1/2}$ | 1.602 | 1.601 | 1.615 | 1.604 | 1.617 | 1.597 | 1.593 | 1.603 | 1.611 | 1.612 |
| Drop testing | Average drop height tested by using 80-mesh abrasive paper/m | 0.62 | 0.62 | / | / | 1.45 | / | / | / | / | / |

Table 5B Physical Parameters and Strengthening Parameters (II)

| Experiment No. | | 25 | 26 | 27 | 28 | 29 | 30 |
|---|---|---|---|---|---|---|---|
| Glass formulation and No. of heat treatment process | | S7, $R_6$ | S8, $R_7$ | S9, $R_6$ | S10, $R_6$ | S11, $R_7$ | S12, $R_7$ |
| Optical property | a* (D65) | -0.09 | -0.12 | -0.11 | -0.07 | -0.03 | -0.08 |
| | b* (D65) | 0.82 | 0.81 | 0.76 | 0.82 | 0.72 | 0.69 |
| | Transmittance at 360nm/% | 71.56 | 71.28 | 72.41 | 71.53 | 72.41 | 73.56 |
| | Transmittance at 550nm/% | 89.42 | 89.56 | 89.52 | 89.49 | 89.34 | 89.96 |
| | Refractive index | 1.61 | 1.59 | 1.59 | 1.59 | 1.59 | 1.59 |
| Physical parameter | Young's modulus/GPa | 124.6 | 120.3 | 121.5 | 119.8 | 123.8 | 121.8 |
| Strengthening process | Strengthening salt bath | 100wt% $NaNO_3$ | 70wt% $NaNO_3$ +30wt% $KNO_3$ | 100wt% $NaNO_3$ | 100wt% $NaNO_3$ | 30wt% $NaNO_3$ +70wt% $KNO_3$ | 100wt% $NaNO_3$ |
| | Strengthening condition (temperature+duration) | 450°C-5h | 450°C-5h | 450°C-5h | 450°C-5h | 450°C-5h | 450°C-5h |
| | \|CTAV\|/Mpa | 48.9 | 43.8 | 41.8 | 56.8 | 57.3 | 41.6 |
| | DOL_0/$\mu$m | 136.9 | 120.6 | 119.8 | 130.5 | 131.5 | 105.6 |
| | Strengthened Vickers hardness (kpf/mm$^2$) | 857 | 824 | 815 | 826 | 847 | 825 |
| | Fracture toughness/Mpa·m$^{1/2}$ | 1.623 | 1.601 | 1.594 | 1.605 | 1.621 | 1.601 |
| Drop testing | Average drop height tested by using 80-mesh abrasive paper/m | 1.24 | / | / | / | / | / |

Table 5C Physical Parameters and Strengthening Parameters (III)

| Experiment No. | | 31 | 32 | 33 | 34 | 35 |
|---|---|---|---|---|---|---|
| Glass formulation and No. of heat treatment process | | S13, $R_6$ | S14, $R_7$ | S15, $R_7$ | S16, $R_6$ | S17, $R_7$ |
| Optical property | a* (D65) | -0.05 | -0.06 | -0.09 | -0.05 | -0.12 |
| | b* (D65) | 0.71 | 0.85 | 0.62 | 0.85 | 0.71 |
| | Transmittance at 360nm/% | 72.48 | 71.22 | 75.65 | 70.59 | 72.45 |
| | Transmittance at 550nm/% | 89.34 | 89.12 | 90.12 | 89.55 | 89.35 |
| | Refractive index | 1.60 | 1.58 | 1.59 | 1.58 | 1.59 |
| Physical parameter | Young's modulus/GPa | 124.5 | 119.4 | 121.3 | 118.7 | 122.6 |
| Strengthening process | Strengthening salt bath | $NaNO_3$ | $NaNO_3$ | $NaNO_3$ | $NaNO_3$ | $NaNO_3$ |
| | Strengthening condition (temperature+duration) | 450°C-5h | 450°C-5h | 450°C-5h | 450°C-5h | 450°C-5h |
| | \|CT_AV\|/Mpa | 40.6 | 42.5 | 54.8 | 68.9 | 45.6 |
| | DOL_0/$\mu$m | 119.3 | 117.6 | 125.6 | 135.6 | 128.3 |
| | Strengthened Vickers hardness (kgf/mm$^2$) | 836 | 845 | 834 | 849 | 824 |
| | Fracture toughness/Mpa·m$^{1/2}$ | 1.612 | 1.619 | 1.61 | 1.619 | 1.602 |
| Drop testing | Average drop height tested by using 80-mesh abrasive paper/m | 1.18 | / | / | 1.47 | / |

As shown above, in Experiment No. 8, due to the low content of $Al_2O_3$ in the base glass, the microcrystalline glass only obtains poor stress after chemical strengthening treatment. In Experiment No.12, because the base glass contains $TiO_2$, the a* (D65) and b* (D65) values of microcrystalline glass are both high, and the optical properties are poor. In Experiment No.15, due to the low content of $Li_2O$ in the base glass, the deep stress obtained by strengthening the microcrystalline glass is in a low level, and the depth of the compressive stress layer is less than 95$\mu$m. In Experiment No.17, due to the extremely high content of $B_2O_3$ in the base glass, the phase separation occurs during the heat treatment, so that the transmittance of the microcrystalline glass is poor. In experiment No.19~35, after chemical strengthening, the microcrystalline glass all have excellent optical properties and deep stress level, so that the drop resistance is good. Tested with 80-mesh abrasive paper, the average anti-abrasive-paper drop height is all above 1.0m.

**Claims**

1.  A microcrystalline glass, **characterized in that** the microcrystalline glass contains a $(Zn, Mg)Al_2O_4$ as a principal crystalline phase and a tetragonal $ZrO_2$ as a secondary crystalline phase; and the microcrystalline glass contains following proportions of oxide components in terms of a molar percentage of oxides:

    | component | mol% |
    |---|---|
    | $SiO_2$ | 38.00%~50.00% |
    | $Al_2O_3$ | 25.00%~30.00% |
    | MgO | 4.00%~8.00% |
    | ZnO | 8.00%~14.00% |
    | $ZrO_2$ | 3.00%~5.00% |
    | $Li_2O$ | 3.00%~8.00% (excluding 8.00mol%); and |

    the microcrystalline glass basically does not contain $TiO_2$, wherein

a content of the oxide components of the microcrystalline glass satisfies following relational expressions:

(1)        $Al_2O_3/(MgO+ZnO)=1.40\sim2.00$;

(2)        $(K_2O+Li_2O+Na_2O+B_2O_3)/(SiO_2+Al_2O_3)=0.10\sim0.20$; and

in the relational expressions, each oxide represents a mole percentage content of an oxide in the component.

2. The microcrystalline glass according to claim 1, wherein a mole percentage of $SiO_2$ in the microcrystalline glass is 38.50%~48.50%; and/or a mole percentage of $Al_2O_3$ is 25.00%~29.00%; and/or a mole percentage of MgO is 4.50% ~7.50%; and/or a mole percentage of ZnO is 8.50%~13.50%; and/or a mole percentage of $ZrO_2$ is 3.50%~4.50%; and/or a mole percentage of $Li_2O$ is 3.00%~7.80%.

3. The microcrystalline glass according to claim 1 or 2, wherein the microcrystalline glass further contains oxide components in following proportions in terms of a mole percentage of oxides:

| | |
|---|---|
| $Na_2O$ | 0%~6.00% |
| $K_2O$ | 0%~3.00% |
| $B_2O_3$ | 0%~6.00% |
| BaO | 0%~4.00% |
| $Y_2O_3$ | 0%~2.00% |
| $La_2O_3$ | 0%~2.00%. |

4. The microcrystalline glass according to any one of claims 1-3, wherein the content of the oxide components, in terms of a mol%, satisfies at least one of relational expressions (3), (4) and (5):

(3)        $Al_2O_3/SiO_2=0.50\sim0.80$;

(4)        $Li_2O/(K_2O+Li_2O+Na_2O)=0.25\sim0.85$; and

(5)        $Li_2O+Na_2O\geq7.00mol\%$.

5. The microcrystalline glass according to any one of claims 1-4, wherein the microcrystalline glass is obtained by a heat treatment at a temperature not exceeding 800°C.

6. The microcrystalline glass according to any one of claims 1-5, wherein a weight ratio of a crystal phase of the microcrystalline glass to the microcrystalline glass is 25.0wt%~45.0wt%, preferably 30.0wt%~45.0wt%, and more preferably 32.0wt%~40.0wt%.

7. The microcrystalline glass according to any one of claims 1-6, wherein an average grain size of the microcrystalline glass is 3.0nm~30.0nm, preferably 3.0nm~10.0nm, more preferably 5.0nm~6.5nm, and further preferably 5.2nm~6.5nm.

8. The microcrystalline glass according to any one of claims 1-7, wherein a Young's modulus of the microcrystalline glass is $\geq110GPa$; preferably, $130GPa\geq$ Young's modulus $\geq110GPa$; and more preferably, $130GPa\geq$ Young's modulus $\geq114GPa$.

9. The microcrystalline glass according to any one of claims 1-8, wherein when a thickness is 0.7mm, the microcrystalline glass has a following transmission color coordinate in a CIELAB color space:

$$a^* = -0.15\sim0.15,$$

preferably -0.15 to -0.03; and

$$b^*=0.30\sim0.90,$$

preferably 0.60 to 0.85; which is for a D65 light source in a SCI mode.

10. The microcrystalline glass according to any one of claims 1-9, wherein when a thickness is 0.7mm and under a light with a wavelength of 550nm, the microcrystalline glass has a transmittance above 85.0%, preferably the transmittance is 88.0%~95.0%; when the thickness is 0.7mm and under a light with a wavelength of 360nm, a transmittance of the microcrystalline glass is above 70.0%.

11. The microcrystalline glass according to any one of claims 1-10, wherein the microcrystalline glass contains a compressive stress layer formed by an ion exchange.

12. The microcrystalline glass according to claim 11, wherein the microcrystalline glass comprises the compressive stress layer, and a depth of the compressive stress layer is DOL_0≥0.14t, where t is a thickness of the microcrystalline glass, preferably $0.20t \geq DOL\_0 \geq 0.15t$.

13. The microcrystalline glass according to claim 11 or 12, wherein the microcrystalline glass has a |CT_AV| of ≥40.0MPa, preferably $80.0MPa \geq |CT\_AV| \geq 40.0MPa$.

14. The microcrystalline glass according to any one of claims 11-13, wherein the microcrystalline glass is obtained by a chemical strengthening treatment in a salt bath containing a potassium salt and/or a sodium salt, wherein the salt bath contains a lithium salt of 0~1wt%; preferably, the microcrystalline glass is obtained by a chemical strengthening treatment in a mixed salt bath of the sodium salt and the potassium salt or a pure sodium salt bath; and further preferably, the microcrystalline glass is obtained by a chemical strengthening treatment in a mixed salt bath of a sodium nitrate and a potassium nitrate or a sodium nitrate salt bath.

15. The microcrystalline glass according to claim 14, wherein a concentration of the sodium nitrate is 30wt%~70wt% in the mixed salt bath of the sodium nitrate and the potassium nitrate.

16. The microcrystalline glass according to any one of claims 11-15, wherein a Vickers hardness of the microcrystalline glass is above 750kgf/mm$^2$, and/or
a fracture toughness of the microcrystalline glass is above 1.200MPa·m$^{1/2}$, preferably above 1.400MPa·m$^{1/2}$, and more preferably above 1.500MPa·m$^{1/2}$.

17. The microcrystalline glass according to any one of claims 11-16, wherein at a thickness of 0.7mm, the microcrystalline glass is performed on an anti-abrasive-paper drop testing by using an 80-mesh abrasive paper, and an average anti-abrasive-paper drop height of the microcrystalline glass is greater than or equal to 0.8m, preferably the average anti-abrasive-paper drop height is 1.00m~1.60m.

18. A preparation method for the microcrystalline glass according to any one of claims 1-10, **characterized in that** the method comprises following steps:

(1) a preparation of a base glass: based on a mole percentage of oxides, the base glass contains following proportions of oxide components: $SiO_2$: 38.00%~50.00%, $Al_2O_3$: 25.00%~30.00%, MgO: 4.00%~8.00%, ZnO: 8.00%~14.00%, $ZrO_2$: 3.00%~5.00%, $Li_2O$: 3.00%~8.00% (excluding 8.00mol%); and

the base glass does not contain $TiO_2$, wherein
a content of the oxide components of the base glass satisfies following relational expressions:

$$Al_2O_3/(MgO+ZnO)=1.40\sim2.00;$$

$$(K_2O+Li_2O+Na_2O+B_2O_3)/(SiO_2+Al_2O_3)=0.10\sim0.20;\text{ and}$$

(2) a preparation of the microcrystalline glass: the base glass obtained in step (1) is subjected to a heat treatment to obtain the microcrystalline glass according to any one of claims 1-10.

19. The preparation method according to claim 18, wherein in the step (2), the heat treatment comprises a nucleation treatment and a crystallization treatment carried out sequentially, wherein a temperature of the nucleation treatment is 650°C~850°C, preferably 650°C~750°C, and a duration of the nucleation treatment is 0h~72h, preferably 0h~24h; and a temperature of the crystallization treatment is 700°C~1000°C, preferably 700°C~800°C, and a duration of the crystallization treatment is 0.1h~72h, preferably 0.1h~24h.

20. The preparation method according to claim 18 or 19, wherein in terms of a mole percentage of oxides, the base glass further contains oxide components in following proportions: $Na_2O$: 0%~6.00%, $K_2O$: 0%~3.00%, $B_2O_3$: 0%~6.00%, BaO: 0%~4.00%, $Y_2O_3$: 0%~2.00%, $La_2O_3$: 0%~2.00%; and/or the content of the oxide components, in terms of mol%, satisfies at least one of following relational expressions: $Al_2O_3/SiO_2$=0.50~0.80; $Li_2O/(K_2O+Li_2O+Na_2O)$ =0.25~0.85; $Li_2O+Na_2O \geq 7.00$mol%.

21. The preparation method according to any one of claims 18-20, wherein the method further comprises a following step: performing a chemical strengthening treatment on the microcrystalline glass obtained by the heat treatment, so as to obtain the microcrystalline glass according to any one of claims 11-17.

22. A microcrystalline glass, **characterized in that** the microcrystalline glass is obtained by the preparation method according to any one of claims 18-21.

23. Use of the microcrystalline glass according to any one of claims 1-17 or the microcrystalline glass according to claim 22 in a mobile phone display screen, a tablet computer display screen, a handheld game console, an electronic terminal, a portable digital device, a vehicle-mounted central control screen, an electronic whiteboard glass, a smart home touch screen, a vehicle windshield glass, an aerocraft windshield glass or an aircraft windshield glass.

24. A base glass, **characterized in that** the base glass can be configured to prepare the microcrystalline glass according to any one of claims 1-17, and based on a mole percentage of oxides, the base glass contains oxide components in following proportions: $SiO_2$: 38.00%~50.00%, $Al_2O_3$: 25.00%~30.00%, MgO: 4.00%~8.00%, ZnO: 8.00%~14.00%, $ZrO_2$: 3.00%~5.00%, $Li_2O$: 3.00%~8.00% (excluding 8.00mol%); and the base glass does not contain $TiO_2$, wherein a content of the oxide components of the base glass satisfies following relational expressions: $Al_2O_3/(MgO+ZnO)$ =1.40~2.00; $(K_2O+Li_2O+Na_2O+B_2O_3)/(SiO_2+Al_2O_3)$=0.10~0.20.

25. The base glass according to claim 24, wherein in terms of a mole percentage of oxides, the base glass further contains oxide components in following proportions: $Na_2O$: 0%~6.00%, $K_2O$: 0%~3.00%, $B_2O_3$: 0%~6.00%, BaO: 0%~4.00%, $Y_2O_3$: 0%~2.00%, $La_2O_3$: 0%~2.00%; and/or a content of the oxide components, in terms of mol%, satisfies at least one of following relational expressions: $Al_2O_3/SiO_2$=0.50~0.80; $Li_2O/(K_2O+Li_2O+Na_2O)$=0.25~0.85; $Li_2O+Na_2O \geq 7.00$mol%.

FIG. 1

FIG. 2

FIG. 3

**FIG. 4**

**FIG. 5**

**FIG. 6**

FIG. 7

FIG. 8

# EP 4 624 434 A1

## INTERNATIONAL SEARCH REPORT

| | International application No. |
|---|---|
| | **PCT/CN2023/099315** |

### A. CLASSIFICATION OF SUBJECT MATTER

C03C10/02(2006.01)i; C03C3/062(2006.01)i; H05K5/03(2006.01)i

According to International Patent Classification (IPC) or to both national classification and IPC

### B. FIELDS SEARCHED

Minimum documentation searched (classification system followed by classification symbols)

C03C; H05K

Documentation searched other than minimum documentation to the extent that such documents are included in the fields searched

Electronic data base consulted during the international search (name of data base and, where practicable, search terms used)

CNABS, CNTXT, ENTXT, VEN, CNKI, ISI: 玻璃, 微晶, 陶瓷, 尖晶石, 氧化锆, 四方, 氧化硅, 氧化铝, 氧化锌, 氧化镁, 氧化锂, glass, microcrystalline, ceramic, spinel, zirconia, tetragonal, silicon oxide, aluminum oxide, zinc oxide, magesium oxide, lithium oxide

### C. DOCUMENTS CONSIDERED TO BE RELEVANT

| Category* | Citation of document, with indication, where appropriate, of the relevant passages | Relevant to claim No. |
|---|---|---|
| X | CN 111615500 A (CORNING INC.) 01 September 2020 (2020-09-01) description, paragraphs 49-90 | 1-25 |
| X | CN 114258387 A (CORNING INC.) 29 March 2022 (2022-03-29) description, paragraphs 21-110 | 1-25 |
| A | CN 111592224 A (SHENZHEN JINGJIANG YUNCHUANG TECHNOLOGY CO., LTD.) 28 August 2020 (2020-08-28) entire document | 1-25 |
| A | CN 112876083 A (SHENZHEN JINGYUN TECHNOLOGY CO., LTD.) 01 June 2021 (2021-06-01) entire document | 1-25 |
| A | CN 110156334 A (ZHAO GUOXIANG) 23 August 2019 (2019-08-23) entire document | 1-25 |
| A | CN 111018354 A (WUHAN UNIVERSITY OF TECHNOLOGY) 17 April 2020 (2020-04-17) entire document | 1-25 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 October 2023** | **17 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

32

## INTERNATIONAL SEARCH REPORT

International application No.

**PCT/CN2023/099315**

**C.    DOCUMENTS CONSIDERED TO BE RELEVANT**

| Category* | Citation of document, with indication, where appropriate, of the relevant passages | Relevant to claim No. |
|---|---|---|
| A | EP 0869105 A1 (CORNING INC.) 07 October 1998 (1998-10-07)<br>entire document | 1-25 |
| A | EP 2450320 A1 (CORNING INC.) 09 May 2012 (2012-05-09)<br>entire document | 1-25 |
| A | US 2019177210 A1 (CORNING INC. et al.) 13 June 2019 (2019-06-13)<br>entire document | 1-25 |

Form PCT/ISA/210 (second sheet) (July 2022)

## INTERNATIONAL SEARCH REPORT
### Information on patent family members

International application No.

**PCT/CN2023/099315**

| Patent document cited in search report | | | Publication date (day/month/year) | Patent family member(s) | | | Publication date (day/month/year) |
|---|---|---|---|---|---|---|---|
| CN | 111615500 | A | 01 September 2020 | WO | 2019108876 | A1 | 06 June 2019 |
| | | | | US | 2019161397 | A1 | 30 May 2019 |
| | | | | US | 11192818 | B2 | 07 December 2021 |
| | | | | TW | 201927717 | A | 16 July 2019 |
| | | | | TWI | 794347 | B | 01 March 2023 |
| | | | | EP | 3717420 | A1 | 07 October 2020 |
| | | | | KR | 20200090235 | A | 28 July 2020 |
| | | | | JP | 2021505504 | A | 18 February 2021 |
| | | | | JP | 7336440 | B2 | 31 August 2023 |
| CN | 114258387 | A | 29 March 2022 | TW | 202108533 | A | 01 March 2021 |
| | | | | EP | 3990406 | A1 | 04 May 2022 |
| | | | | US | 2020407268 | A1 | 31 December 2020 |
| | | | | US | 11542193 | B2 | 03 January 2023 |
| | | | | WO | 2020264229 | A1 | 30 December 2020 |
| | | | | JP | 2022538415 | A | 02 September 2022 |
| CN | 111592224 | A | 28 August 2020 | | None | | |
| CN | 112876083 | A | 01 June 2021 | | None | | |
| CN | 110156334 | A | 23 August 2019 | | None | | |
| CN | 111018354 | A | 17 April 2020 | | None | | |
| EP | 0869105 | A1 | 07 October 1998 | KR | 19980080877 | A | 25 November 1998 |
| | | | | JPH | 1171134 | A | 16 March 1999 |
| | | | | JP | 4226680 | B2 | 18 February 2009 |
| | | | | DE | 69803135 | D1 | 21 February 2002 |
| | | | | DE | 69803135 | T2 | 22 August 2002 |
| | | | | TW | 506952 | B | 21 October 2002 |
| | | | | US | 5968857 | A | 19 October 1999 |
| | | | | EP | 0869105 | B1 | 16 January 2002 |
| EP | 2450320 | A1 | 09 May 2012 | EP | 2450320 | B1 | 08 January 2014 |
| | | | | ES | 2443592 | T3 | 19 February 2014 |
| | | | | JP | 2014500844 | A | 16 January 2014 |
| | | | | JP | 6049141 | B2 | 21 December 2016 |
| | | | | US | 2012114955 | A1 | 10 May 2012 |
| | | | | US | 8853110 | B2 | 07 October 2014 |
| | | | | WO | 2012061464 | A1 | 10 May 2012 |
| | | | | KR | 20140005168 | A | 14 January 2014 |
| | | | | KR | 101951963 | B1 | 22 April 2019 |
| | | | | TW | 201228964 | A | 16 July 2012 |
| | | | | TWI | 545097 | B | 11 August 2016 |
| US | 2019177210 | A1 | 13 June 2019 | JP | 2019522620 | A | 15 August 2019 |
| | | | | JP | 7082578 | B2 | 08 June 2022 |
| | | | | WO | 2017223551 | A1 | 28 December 2017 |
| | | | | US | 2021179484 | A1 | 17 June 2021 |
| | | | | US | 11591256 | B2 | 28 February 2023 |
| | | | | WO | 2017223561 | A1 | 28 December 2017 |
| | | | | EP | 3475235 | A1 | 01 May 2019 |
| | | | | EP | 3475236 | A1 | 01 May 2019 |
| | | | | TW | 201815715 | A | 01 May 2018 |
| | | | | US | 2019256407 | A1 | 22 August 2019 |
| | | | | US | 2023167015 | A1 | 01 June 2023 |

Form PCT/ISA/210 (patent family annex) (July 2022)

| Patent document cited in search report | Publication date (day/month/year) | Patent family member(s) | | Publication date (day/month/year) |
|---|---|---|---|---|
| | | KR 20190022678 | A | 06 March 2019 |
| | | KR 102513539 | B1 | 24 March 2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211546703
- US 5968857 A
- CN 104478219 A
- CN 111018354 A